Europäisches Patentamt

European Patent Office

Office européen des brevets

(11) Publication number: **0 617 380 A2**

# EUROPEAN PATENT APPLICATION

(21) Application number: **93309013.6**

(51) Int. Cl.⁵: **G06K 9/64**, G06K 9/32

(22) Date of filing: **11.11.93**

(30) Priority: **26.03.93 JP 68666/93**

(43) Date of publication of application:
**28.09.94 Bulletin 94/39**

(84) Designated Contracting States:
**DE FR GB IT NL**

(71) Applicant: **KONICA CORPORATION**
**26-2, Nishishinjuku 1-chome,**
**Shinjuku-ku**
**Tokyo 160 (JP)**

(72) Inventor: **Yamanaka, Yasushi, c/o Konica**
**Corporation**
**1 Sakura-machi**
**Hino-shi, Tokyo (JP)**
Inventor: **Iwata, Tetsuya, c/o Konica**
**Corporation**
**1 Sakura-machi**
**Hino-shi, Tokyo (JP)**
Inventor: **Satoh, Yoshinori, c/o Konica**
**Corporation**
**1 Sakura-machi**
**Hino-shi, Tokyo (JP)**
Inventor: **Matsui, Mitake, c/o Konica**
**Corporation**
**1 Sakura-machi**
**Hino-shi, Tokyo (JP)**

(74) Representative: **Wood, Anthony Charles et al**
**Urquhart-Dykes & Lord**
**91 Wimpole Street**
**London W1M 8AH (GB)**

(54) **Forming method of composite discriminating function, character recognition method and pre-processing method of character recognition using the forming method.**

(57) A forming method of a synthetic discriminant function for use in discriminating characters when each of the character is correlatively calculated with a character pattern. The synthetic discriminant function is formed in the manner that a Fischer ratio shown by the below equation is applied to a criterion for evaluation;

$$\text{Fischer ratio } J(h) = \frac{\left(\overline{y_1} - \overline{y_2}\right)^2}{\Sigma \sigma_i^2}$$

in which $\overline{y_1}$, $\overline{y_2}$ represent the expectation value of correlation output value of each class when the character patterns are discriminated into two classes by the synthetic discriminant function, and $\sigma_1$ represents the variance of correlation output value.

FIG. 1

1993.1.13
17-0339
0 0 0 0 0 0
H4.9.28M

F

1

DIGITIZED FILM

TRANSMISSION OF IMAGE DATA

COMMUNICATION (IMAGE DATA)

RADIATION INFORMATION SYSTEM — 3

COMMUNICATION (CHARACTER DATA)

2

PROCESSING COMPUTER

READING OUT OF IMAGE DATA

CHARACTER RECOGNITION

PRE-PROCESSING

SPECIFIED REGION OF CHARACTER INFORMATION

SKEW CORRECTION OF CHARACTERS

CORRECTION OF FILM INSERTION DIRECTION

DETECTION OF EACH CHARACTER IMAGE AREA

RECOGNITION/ VERIFICATION

RECOGNITION OF CHARACTERS

VERIFICATION OF D,B

ERROR CORRECTION

COMMUNICATION WITH RIS

FILING OF IS&C

## BACKGROUND OF THE INVENTION

The present invention relates to a forming method of a synthetic discriminant function having high discrimination performance, a character recognition method and a pre-processing method for character recognition using the formed synthetic discriminant function, in a recognition system in which characters of character information and the like written in an X-ray film are recognized using the synthetic discriminant function.

Recently, the X-ray film is used for photographing various medical images, and digitalizing of an image on the X-ray film is automatically conducted by a digitizer. However, an inputting oppperation of character information, in which an attribute such as an ID number of the film or a name of a patient is written, is manually conducted now. In a large hospital, hundreds of X-ray films should be processed a day, and in the existing circumstances, a great amount of labor is necessary for inputting character information of the film. Accordingly, the development of a system, which can automatically recognize character information, is desired.

Conventionally, various character recognition methods have been tried with respect to the character recognition. However, in the character recognition, it is very difficult that a recognition ratio is increased to 100%. Further, when the recognition ratio is tried to be increased using a widely known Bays's decision rule and the like, a remarkably long period of time is necessary for recognition, which is a problem.

The character information in the X-ray film is recorded in an outside portion of a subject area, that is, in a circumferential portion. However, recorded portions are different depending on types of systems, and therefore, it is necessary that the area, in which character information is recorded, is detected prior to character recognition of the character information.

Further, for example, a recording system of character information which is commonly adopted now is the following system in which: an X-ray inspection engineer manually inserts a card, which is called a name card, and in which attribute information of a patient is written, into a recording device; and the X-ray film is optically printed-in and the information of the patient is recorded on the film. Accordingly, sometimes, the character is remarkably inclined with respect to the film, and that is sometimes attributed to a failure of detection of each character image area (division of the image area of each character). Therefore, it is necessary to correct an inclination of the character.

## SUMMARY OF THE INVENTION

In view of the foregoing problems, the first object of the present invention is to increase an accuracy of character recognition and to shorten a period of time necessary for recognizing the character.

Further, the second object of the present invention is to correct the inclination of the character prior to the character recognition, and to correctly conduct pre-processing in which the character is corrected into the correct direction and correct position in a short period of time.

In order to accomplish the foregoing objects, the synthetic discriminant function, which is used for discriminating the character in the case where the character is correlatively calculated with a character pattern, is formed in the manner that a Fischer ratio shown by the next equation is applied to a criterion for evaluation.

(Equation 2)

$$\text{Fischer ratio } J(h) = \frac{\left(\overline{y_1} - \overline{y_2}\right)^2}{\Sigma \sigma_i^{\,2}}$$

Where, $\overline{y_1}$, $\overline{y_2}$ are expectation values of correlation output values of classes at the time when the character pattern is discriminated into two classes by the synthetic discriminant function, and $\sigma_1$ is a variance thereof.

In the case where the foregoing Fischer ratio is applied as a criterion for evaluation, a group of the synthetic discriminant functions may be formed in the following manner: for example, types of characters to be recognized are classified into two classes; the synthetic discriminant functions, by which each Fischer ratio is made maximum with respect to all combinations of the classification, are formed; in these functions,

3

a combination of classifications, in which the Fischer ratio is maximum, and the synthetic discriminant function in this combination are selected; next, the class, which can be classified, in already classified two classes is classified again into two classes; a combination of classification and the synthetic discriminant function are selected in the same way as the foregoing selection; and these operations for selection are repeatedly conducted so that a group of synthetic discriminant functions by which all types of characters can be recognized are formed.

In the foregoing case, the group of the synthetic discriminant functions may be formed in the following manner: at first, the first synthetic discriminant function by which one character is discriminated from other characters is formed; next, the second synthetic discriminant function by which one character in the foregoing other characters is discriminated from other remaining characters is formed; and these operations are repeatedly conducted in the same manner as the foregoing so that all characters can be recognized.

A character recognition method according to the present invention will be described as follows: a correlation calculation with a character to be recognized is conducted using synthetic discriminant functions formed by the foregoing operations; a class with a larger correlation value is selected; and classification/discrimination operation is conducted from the class with a larger correlation value to the class with smaller correlation value so that the character can be recognized as a specific character.

The probability of occurrence of errors in the result of the discrimination may be found and stored in a memory according to the correlation value found by the correlation calculation with each synthetic discriminant function used for character recognition.

When it is confirmed that the character has been faultily recognized, a synthetic discriminant function in which the probability of occurrence of errors in the discrimination result is maximum is detected, the discrimination result is changed, and the discrimination operation may be conducted again so that a character is newly recognized.

In this case, when a combination of the characters which are obtained by the recognition of each character is compared with recording data of a combination of correct characters and is confirmed, the character which has been faultily recognized may be confirmed.

Further, the pre-processing method for the character recognition according to the present invention will be described as follows: a line-shaped mark is recorded in the direction parallel to the direction of an array of characters on either the upper side or lower side of a group of characters recorded in a recording media, and a line-shaped mark is also recorded in the direction perpendicular to the direction of an array of characters on either the left side or right side of a group of characters; on the other hand, as pre-processing to recognize the character recorded in the recording media, an inclination of one line-shaped mark is detected and the inclination of the mark is corrected; next, the position detection of the other line-shaped mark is conducted, and the direction and position of the character group are detected; and according to the detection result, the image data of the character group is image-processed/corrected into the regular direction and position.

In the foregoing, the processing to detect the inclination of the one line-shaped mark may be conducted as follows: density distribution data is found at the time when the mark is projected in the horizontal or vertical direction corresponding to the direction of the line-shaped mark; and the inclination detection processing may be conducted according to data obtained at the time when the density distribution data is projected in the direction of the angle in which the density distribution data is inclined by every unit angle within a predetermined angle.

When a plurality of different characters are discriminated by a correlation calculation with the synthetic discriminant function, even when the correlation to the same character with a different font is high, if non-correlation with other characters is not high, the discrimination system does not always have a good discrimination facility. Especially, as the number of fonts are increased, when the correlation with the same character is tried to be increased, the non-correlation with other characters is decreased. Accordingly, the synthetic discriminant function having a high discrimination facility can be determined by a balance of a high correlation to the same character and a high non-correlation to different characters.

In the Fischer ratio which is a criterion for evaluation of the synthetic discriminant function, the value of a numerator is the degree of difference of the correlation value to the two classes to be discriminated, and the value of a denominator is the sum of the degrees of variances of the correlation values in the classes. That is, because the degree of variance of the correlation value is smaller as the correlation to the same character is higher, the value of the denominator is smaller. Because the degree of difference is larger as the non-correlation to different characters is higher, the value of the numerator is larger. Therefore, the Fischer ratio is increased in both cases. Accordingly, when conditions, in which the correlation to the same character is high, and the non-correlation to the different characters is also high, are satisfied, the Fischer ratio is maximum, so that the discrimination facility is maximum.

4

Due to the foregoing, when the Fischer ratio is used as a criterion for evaluation, and the synthetic discriminant function is formed, the synthetic discriminant function with high discrimination facility can be obtained.

When only two characters are discriminated, one synthetic discriminant function may be simply formed so that the Fischer ratio becomes maximum. However, when characters, the number of which is larger than two, are discriminated, it is necessary that the number of synthetic discriminant functions and a period of time which is necessary for discrimination are considered.

The following discrimination method can be used in the present invention: by a discrimination procedure such as so-called tree construction and the like, for example, the ten types of characters are classified into two classes; the large number of characters are classified into the small number of characters in the manner that the classified characters are further classified respectively into two classes; and the classified characters are discriminated by the synthetic discriminant function. In this case, as a method to form the synthetic discriminant function, the following method is considered: the synthetic discriminant functions are respectively formed, with respect to all thinkable combinations of classifications, so that the Fischer ratio becomes maximum; and in these functions, when the combination of the classification in which the Fischer ratio becomes maximum is selected, the synthetic discriminant function in which the classification discrimination facility is greatly increased in all classes from the large class to the small class can be obtained.

Accordingly, when the character recognition is conducted using the synthetic discriminant function which is formed in the foregoing manner, the character can be highly accurately recognized in a short period of time.

In the foregoing case, when each synthetic discriminant function which can discriminate one character from other characters is formed, the probability which can recognize characters in a small number of discriminations is increased.

Further, according to the correlation value with each synthetic discriminant function, when a probability of error occurrences in the discrimination result is stored in a memory, the discrimination result of the synthetic discriminant function, in which an erroneous discrimination probability is high, can be changed and discriminated again according to data of the erroneous discrimination probability, when the error occurrence is found later. When the synthetic discriminant function, in which the erroneous discrimination probability is maximum, is detected and automatically discriminated again, the discrimination operation is greatly effective.

On the other hand, apart from the tree construction, there is a method in which the synthetic discriminant functions respectively corresponding to each character are formed. That is, each synthetic discriminant function discriminates a specified character from other characters, and it is necessary that the correlation with the specified character is high, and the non-correlation with other characters is high.

In this case, when the Fischer ratio is formed as a criterion for evaluation, a group of synthetic discriminant functions, in which discrimination facilities are greatly increased respectively, can be formed.

When the group of synthetic discriminant functions are used for the character recognition, the correlation calculation of the character to be discriminated is performed with respect to each synthetic discriminant function, and the character in which the correlation value is maximum is selected, and the character recognition is performed.

When errors are found in this character recognition method, the character, the correlation value of which is next to the maximum, is selected and recognized, and thereby, the probability, in that the character recognition operation is accurately corrected, can be increased.

Further, in order to positively conduct the character recognition for a medical use or the like, a combination of the recognized characters is verified with a combination of correct characters separately recorded. When the recognized character does not exist in the recorded data, it is judged that the recognition is erroneous. Thereby, characters can be discriminated again as described above.

Further, when longitudinal and lateral line-shaped marks are put outside of the character group of the recording medium; an inclination of the character is detected from data with one of two kinds of marks and corrected; the direction and the position of the group of characters are detected from the data with the other mark; and pre-processing to correct the inclination of characters into the regular position and direction is conducted, accurate detection of each area where each of the character is recorded can be conducted by pre-processing in a short period of time.

## BRIEF DESCRIPTION OF THE DRAWINGS

Fig. 1 is a view showing the entire structure and functions of a character recognition system according to the present invention.

Fig. 2 is views showing examples of character information recording areas in X-ray films used in the the foregoing embodiment.

Fig. 3 is views showing embodiments of input conditions of the X-ray films.

Fig. 4 is a view showing a character information recording portion and a result of projection processing in the foregoing embodiment.

Fig. 5 is a flow chart showing a detection operation of the character information recording area in the foregoing embodiment.

Fig. 6 is a flow chart showing a detection operation of inclination of an character and a correction operation in the foregoing embodiment.

Fig. 7 is a flow chart showing the first half of the processing in which the direction and position of a character are detected and corrected into the normal condition in the foregoing embodiment.

Fig. 8 is a flow chart showing the latter half of the processing following Fig. 6.

Fig. 9 is a flow chart showing determination of the position of detection of each character and detection processing of each character.

Fig. 10 is a flow chart showing character recognition/verification processing in the foregoing embodiment.

Fig. 11 is a view showing discrimination facility of characters using SDF.

Fig. 12 is a view showing projection conditions onto SDF by which a plurality of patterns are separated into two classes.

Fig. 13 is a view in which coefficients with respect to the characteristic vector $u_i$ of SDF optimized according to the Fischer ratio are compared with those of the conventional SDF.

Fig. 14 is a view showing an output value of the optimized SDF.

Fig. 15 is a view showing a model of a discrimination method by means of SDF for a tree structure.

Fig. 16 is a flow chart showing an embodiment of a formation method of SDF for the tree structure.

Fig. 17 is a flow chart showing an embodiment of the character recognition method in which SDF formed by the foregoing method is used.

Fig. 18 is a view for explaining a probability of erroneous recognition in the foregoing embodiment.

## DETAILED DESCRIPTION OF THE PREFERRED EMBODIMENTS

Referring to drawings, an embodiment of the present invention will be described as follows.

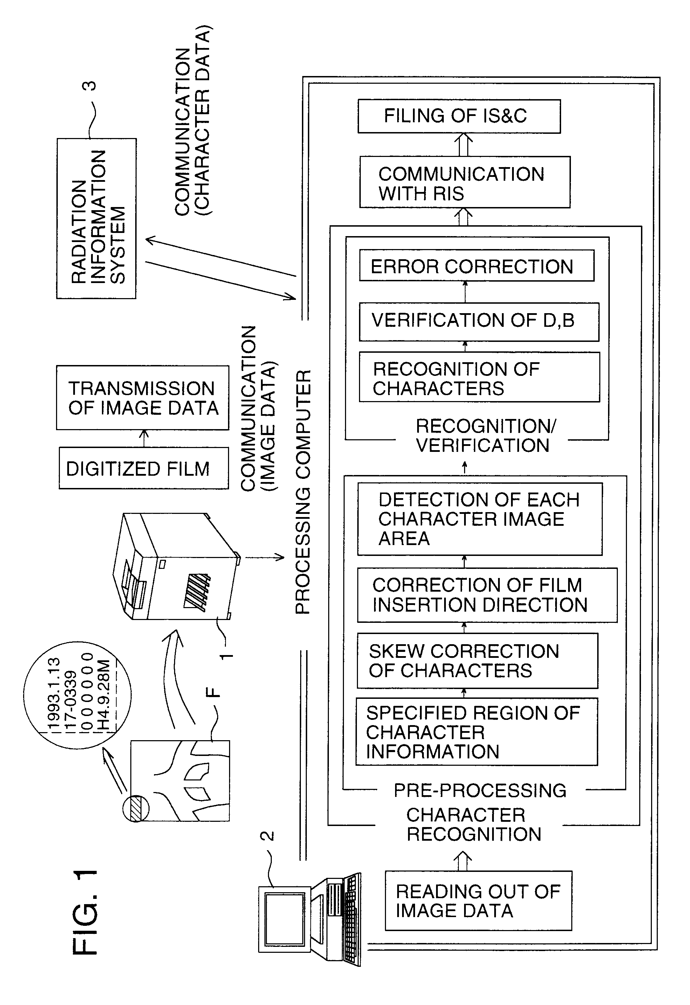

Fig. 1 shows the structure of an automatic character information recognition system in which character information recorded in an X-ray film is recognized using a synthetic discriminant function, and pre-processing is carried out prior to the character recognition by an method according to the present invention.

In Fig. 1, when an X-ray film F, on which an X-ray is irradiated, and in a peripheral portion of which the character information is written, is set to a digitizer 1, the digitizer 1 digitalizes data of an X-ray image and the character information, and the digitalized data is inputted into a processing computer 2, in which character recognition according to the present invention is conducted, as image data.

Processes of automatic character information recognition by a computer are divided into pre-processing and character recognition/verification in a large way as shown in the drawing.

In the pre-processing, the following operations are conducted: an area, in which the inputted character information is recorded, is specified on the X-ray film F which is set to the digitizer; the inclination of the character is detected and corrected; the direction in which the film is inserted is detected, and an image is corrected into a normal position; and after that, each area in which each of the character is recorded is detected.

In the character recognition/verification, the following operations are conducted: characters detected one by one using a synthetic discriminant function (which is called SDF hereinafter) are recognized so that the character information is composed; the character information is checked using error correction codes (ECC) such as a checksum which are attached to the character information; when the character information is correct, no operation is conducted; when the character information is erroneous, characters are replaced with other characters; and then, the character information is verified with a data base of a patient stored in a radioactive ray information system 3.

Next, details of processing will be described as follows.

6

In the pre-processing, characters necessary for recognizing the character information are detected from the inputted image data on the X-ray film. There are some types of X-ray films according to their sizes. For example, in an X-ray film, the size of which is 14 inches in the longitudinal direction and 14 inches in the lateral direction, a sampling interval is 0.175 mm and data recorded on the film is digitalized into pixels of 2000 × 2000 in gradations of 10 bits. The inspection date, a patient's ID, a patient's name, the date of patient's birth, and the distinction of sex are recorded in the character information. The pre-processing is roughly divided into the following four processes: specification of a character information area; correction of inclination of characters; detection of the direction of film insertion; and detection of characters. Processing operations in each step will be described as follows.

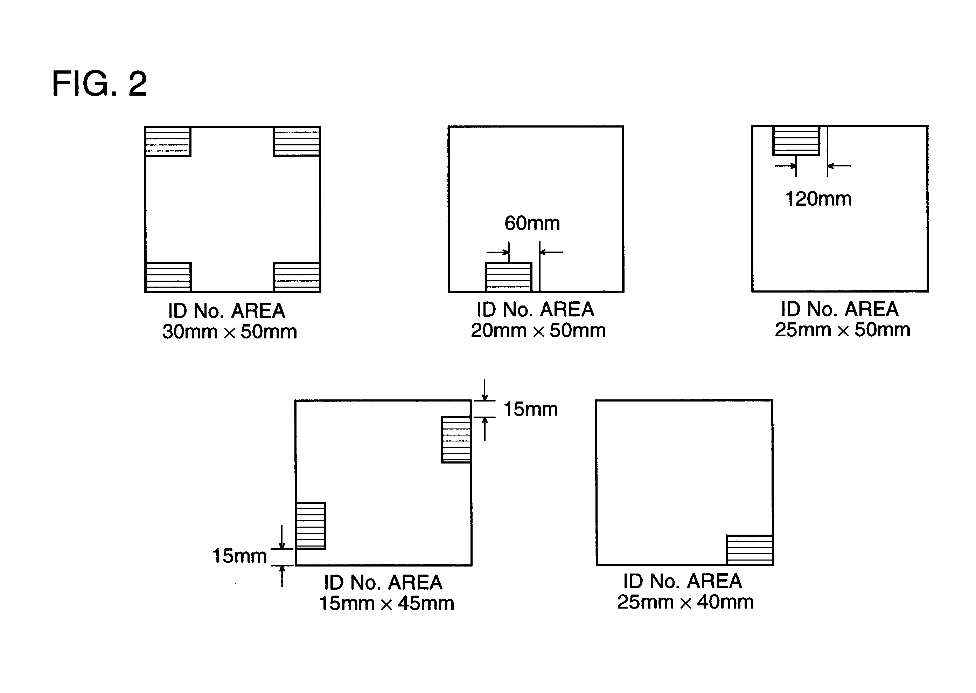

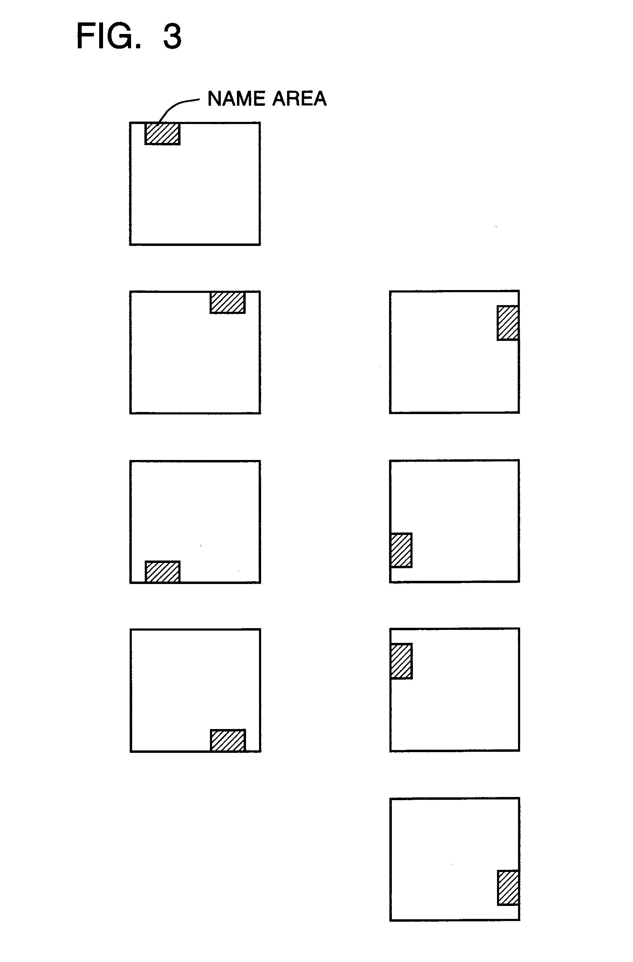

In the first step of pre-processing, an area in which the character information is recorded is specified from the entire area on the X-ray film. In Fig. 2, a table of locations is shown in which character information is recorded in the X-ray film of a size of 14 × 14 inches, which is used in a certain hospital. There are nine locations in which character information can be recorded. However, the number of locations, in which character information can be recorded, attains to 40 because there are cases in which the X-ray film is digitalized upside down or inside out as shown in Fig. 3. In addition to the foregoing size, there are following sizes of X-ray films such as 11 × 14 inches, 8 × 10 inches, and 14 × 17 inches. Accordingly, locations and sizes in which character information is recorded are different according to types of X-ray films. Further, the recording method of character information is different according to hospitals, and therefore, an attentive measure should be taken.

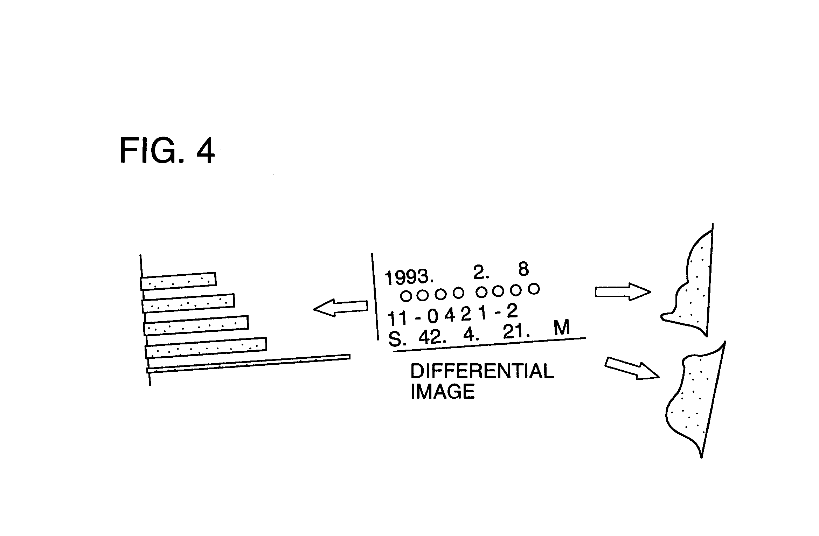

In view of the foregoing, in the present invention, longitudinal and lateral lines are added to a character information portion as shown in Fig. 4 so that inclination of characters can be easily detected and input conditions of films can be easily judged. That is, longitudinal lines are added to the left side of the character information, and lateral lines are added to a lower portion of the character information.

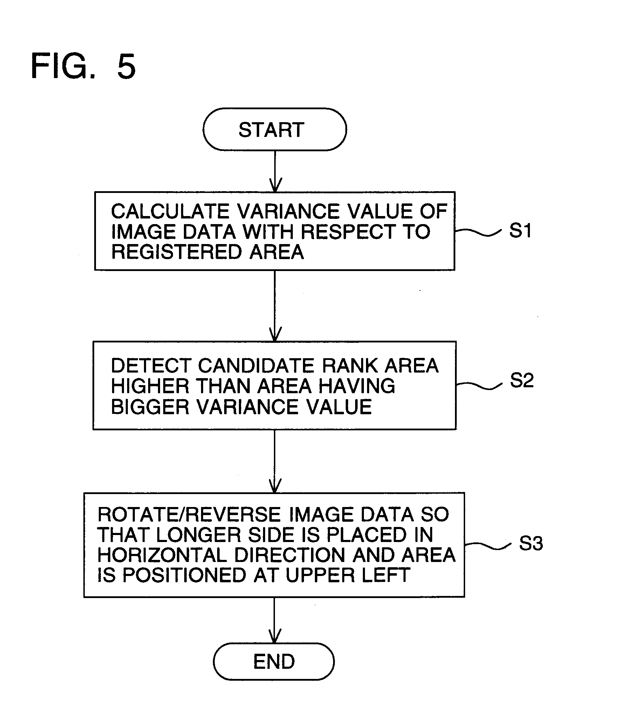

The foregoing specific processing of the character information area will be described as follows according to a flow chart shown in Fig. 5.

A value of variance is calculated according to the following equation at each area which is suitable for recording the character information and which is stored in the memory (step 1).

[Equation 3]

$$\text{A value of variance} = \frac{1}{M^2} \sum_{x,y=1}^{M^2} \{f(x,y) - \bar{\bar{f}}\}^2$$

where f(i,j) represents density data at a point of (i,j).

An area in which the calculated value of variance is maximum is detected as a character information section area. In this case, it is used that the value of variance of a portion which has an edge such as a character, and which has shading is increased (step 2). Here, considering that the area is erroneously detected, higher-ranking three areas, in which the values of variance are large, are selected and stored as the areas which are suitable for recording the character information, and components of the longitudinal and lateral lines are detected at the same time. When the components are not detected, the first suitable area is replaced with the second and third suitable areas.

Next, image data is rotated so that the area which has the maximum value of variance is positioned in an upper side of the left corner in order to make a long side of the area coincide with the horizontal direction (step 3). In this case, when the area is positioned in the corner and includes both sides which are crossed at right angles, the long side is not judged because sometimes the long side of the area coincides with the vertical direction even when the area is positioned in the upper side of the left corner. In this case, the long side may be distinguished from the short side when two sides, in which the sums of data are maximum in projection processing in the longitudinal and lateral directions, which will be described later, are compared each other.

In the second step, inclination of the character is detected and corrected. In the present X-ray inspection, a card which is called name card and in which patient's attribute information is written is manually inserted into a device by an X-ray inspection engineer, the card is optically printed in the X-ray film, and patient's information is recorded in the film. Because the foregoing is conducted by a device of a type in which the name card is manually inserted, sometimes, the character is remarkably inclined with respect to the film, and erroneous detection is attributed to the foregoing inclination of the character. Therefore, correction of inclination of the character is necessary.

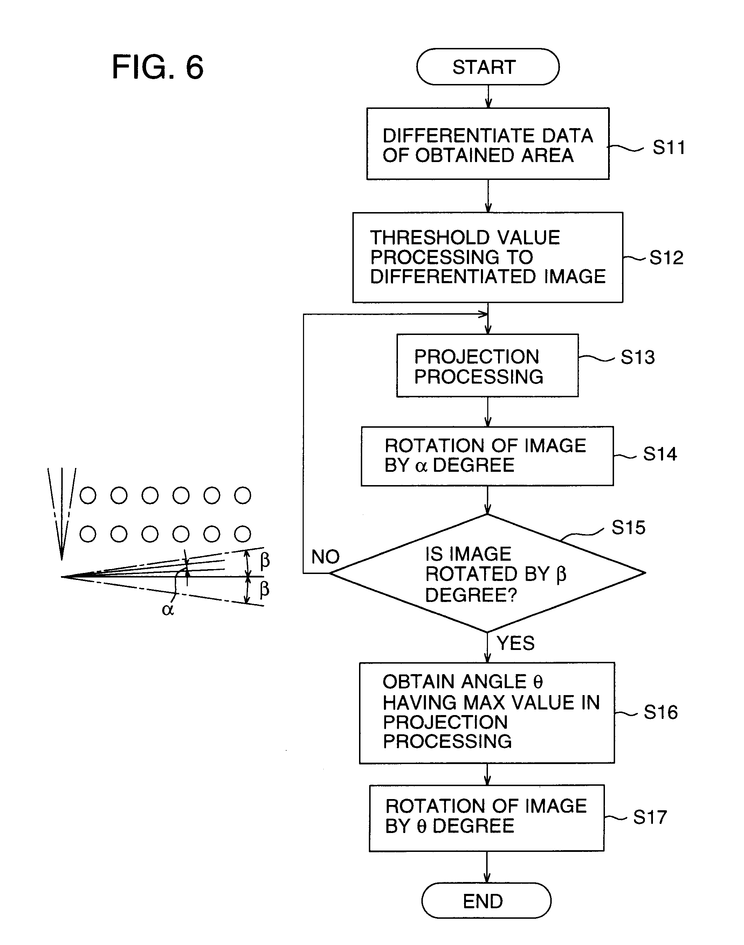

Processing for detecting the inclination of the character and correcting the inclination will be described as follows according to a flow chart shown in Fig. 6.

The following differential calculation is conducted with respect to data (density data) of the specified character information recording area (step 11).

$$f(i,j) = [\{f(i+1,j) - f(i,j)\}^2 + \{f(i,j+1) - f(i,j)\}^2 ]^{1/2}$$

Threshold value processing is conducted with respect to a differential image obtained from the foregoing differential calculation (step 12). That is, the threshold value processing is conducted as follows: density is discriminated to judge in which range the density stands, based on plural threshold values, and a specific value is given to the density corresponding to the above-described range.

Projection processing is conducted with respect to image data obtained from the foregoing processing (step 13). Projection processing is the processing in which distribution of a sum of data is found at the time when image data is projected in one direction as shown in Fig. 4. At first, the projection direction is set in the lateral (horizontal) direction.

Then, projection processing is conducted in the projection direction while an angle of inclination is being inclined a unit angle $\alpha$ by $\alpha$ to a predetermined angle of inclination $\pm \beta$ (for example, $\pm 4°$) with respect to the horizontal direction (step 14 → step 15 → step 13). The inclination operation is conducted when an affine transformation is conducted with respect to the image. The affine transformation is conducted as follows: a gradation value of a pixel (x, y) of the image after transformation is determined by a gradation value of a pixel (x', y') of the image before transformation determined by the following equation.

[Equation 4]

$$\begin{pmatrix} x \\ y \end{pmatrix} = \begin{pmatrix} \sin(\alpha \cdot n) & -\cos(\alpha \cdot n) \\ \cos(\alpha \cdot n) & \sin(\alpha \cdot n) \end{pmatrix} \begin{pmatrix} x' \\ y' \end{pmatrix}$$

Where, n = 1 to $\beta/\alpha$.

After the foregoing projection processing has been completed, an angle $\theta$ is found which has the maximum value of the sum of data in projection processing in each projection direction (step 16). Here, because the sum of data of a line in the direction of character alignment is maximum when the line coincides with the projection direction, the projection direction, in which the sum of data is maximum, coincides with the direction of the line in the direction of the character alignment. Accordingly, the angle $\theta$, at which the projection direction crosses with the horizontal direction, can be found as an inclined angle of the character. Here, it is of course that detection accuracy is increased as a unit angle $\alpha$ is decreased, however, the accuracy can be also increased by interpolation.

Inclination is corrected when the image is rotated by the affine transformation by an inclined angle $\theta$ obtained in the foregoing way (step 17).

In the third stage, the insertion direction of the X-ray film is judged. Sometimes, the case in which the X-ray film is upside down or inside out occurs with respect to a normal insertion direction of the X-ray film as described above, and therefore, the insertion direction of the X-ray film is judged and corrected into a regular position.

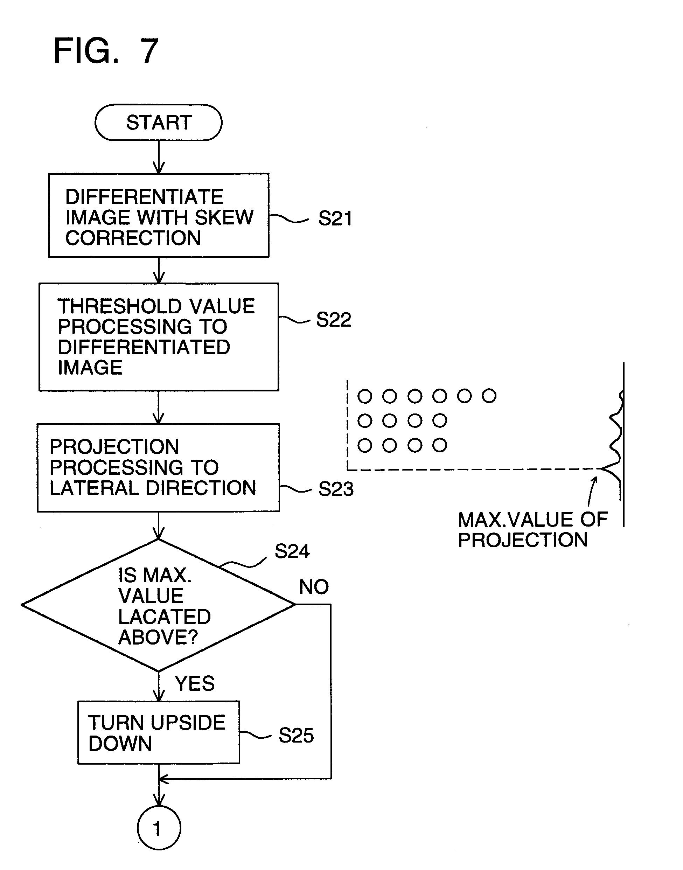

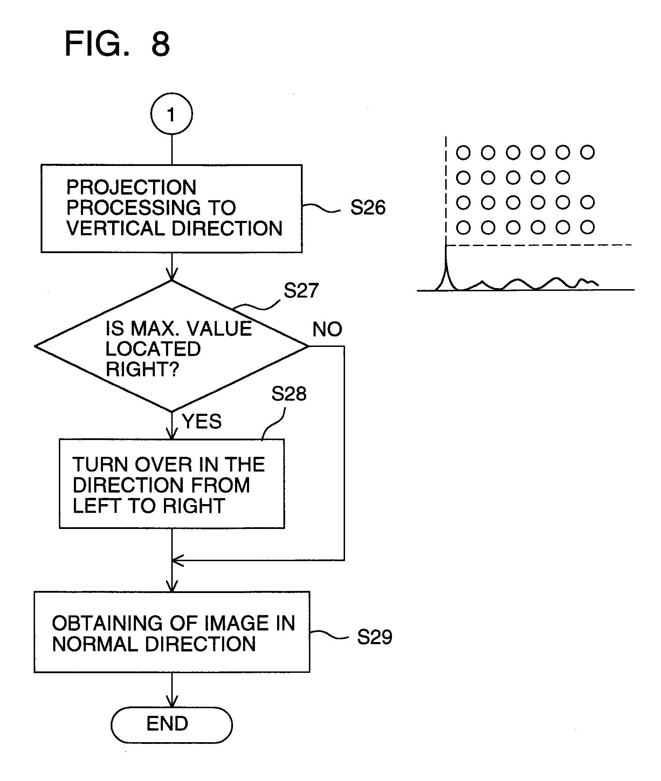

Judgement processing whether the X-ray film is upside down or inside out will be described as follows according to flow charts shown in Fig. 7 and Fig. 8.

After the differential calculation (step 21), threshold value processing (step 22), projection processing in the lateral direction (step 23) have been conducted, it is judged whether the maximum value is located above or it is located below. (step 24). As a simplified method, maximum data in projection processing which has been conducted while the image is being rotated in steps 13 to 15 may be used. Then, the sequence advances to step 24 and maximum data may be judged.

When it is judged that the maximum value is located below, no processing is conducted. However, when it is judged that the maximum value is located above, the direction of the image is reversed so that the image is upside down (step 25). That is, because lateral lines are written below the character information, when the lateral line which is detected as the maximum value is located above the character information, the vertical direction of the X-ray film is corrected when the film is turned so that it is upside down.

Next, projection processing in the longitudinal (vertical) direction is conducted (step 26), and it is judged whether the maximum value is located in the left side or the right side (step 27).

When it is judged that the maximum value is located in the left side, no precessing is conducted. When it is judged that the maximum value is located in the right side, the horizontal direction of the image is reversed (step 28). That is, because the longitudinal line is written in the left side of the character information, when the longitudinal line which is detected as the maximum value is located in the right side of the character information, the horizontal direction is corrected when the horizontal direction of the film is reversed (step 29).

Due to the foregoing processing, the image is set in the normal direction without any inclination.

Further, the image is set in a normal position where the image is not reversed to be upside down or inside out.

In the fourth stage, each character image area is detected. That is, when the character is recognized, an area in which each character is recorded is detected.

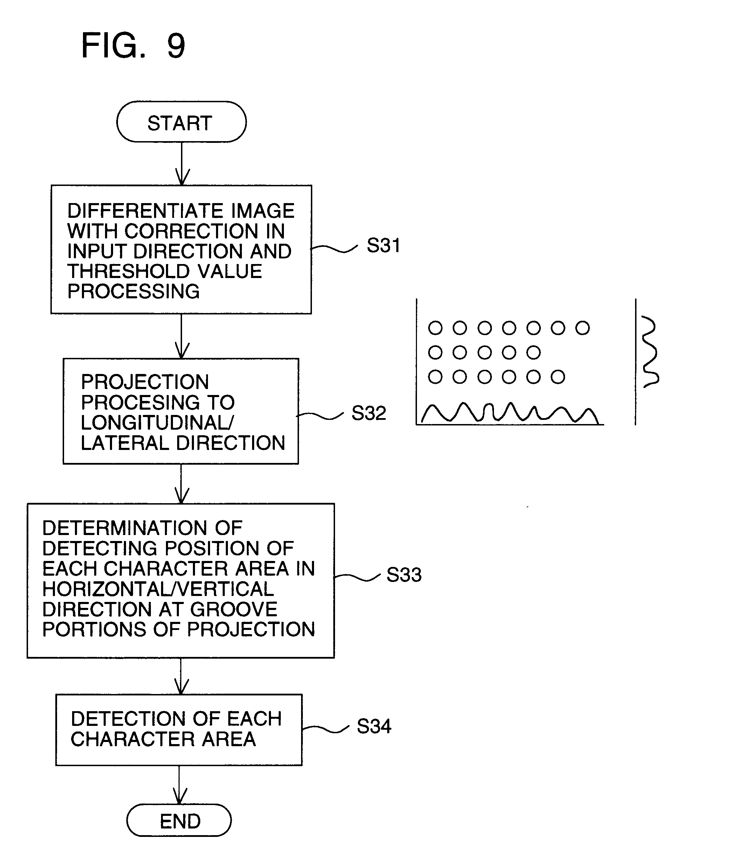

The detection processing of each character image area will be described as follows according to a flow chart shown in Fig. 9.

After the differential calculation and threshold value processing have been conducted with respect to the image the direction of which has been corrected as described above, projection processing in the longitudinal and lateral directions is conducted (steps 31 and 32). However, because projection processing in the longitudinal and lateral direction have been conducted with respect to the image, the inclination of which was corrected, at the time when the direction of the image has been corrected, data obtained at the time may be set again in the correct direction.

Due to projection processing in the longitudinal and lateral directions, because the sum of amounts of data is large in the area in which characters are written, a peak is formed. Because an area between a group of characters and other group of characters is blank, the data value is small and a bottom is formed. Accordingly, an area which is surrounded by lattice-axes of the longitudinal and lateral directions which are passed through the bottom is used as a character area, and a position of detection of each character is determined (step 33). A character is detected according to the determined position of detection (step 34).

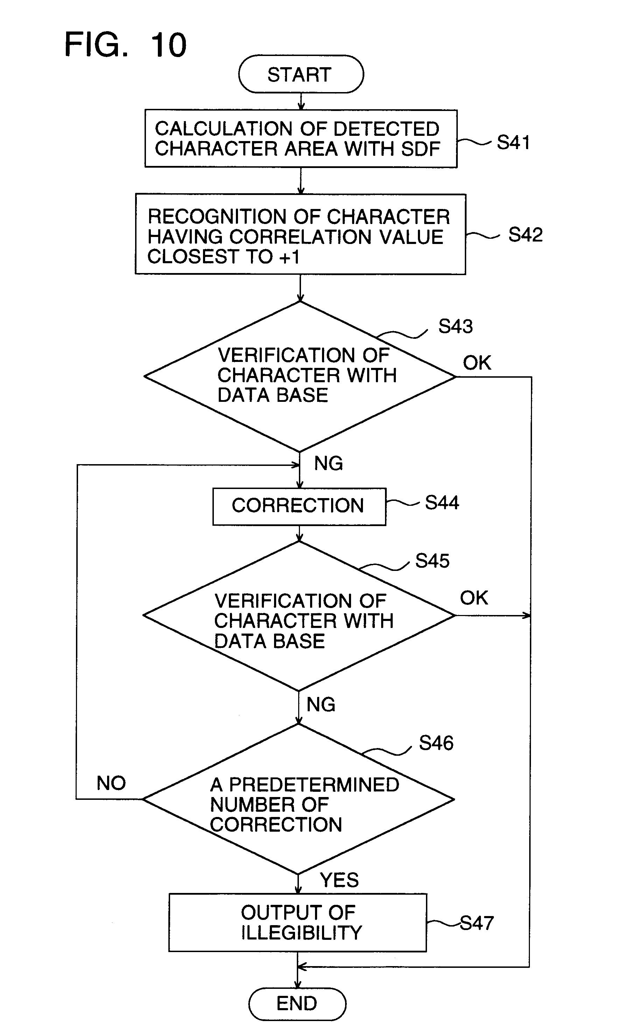

After pre-processing has been conducted as described above, the detected character is recognized and verified. Recognition/verification processing will be described as follows according to a flow chart shown in Fig. 10.

At first, when the correlation calculation of the detected character with SDF is conducted, a read-out result of the character information is outputted (step 41). For simple description, the correlation calculation is a calculation of an inner product of a character pattern vector and an SDF vector. A value of the correlation is a value of the inner product which is correlation-calculated. It is necessary to recognize ten characters of 0 to 9 as the character information. In this example, while the ten characters are used as reference patterns, ten sheets of SDFs are synthesized and correlation values are respectively set to +1 with respect to a pattern of each character and to -1 with respect to other patterns.

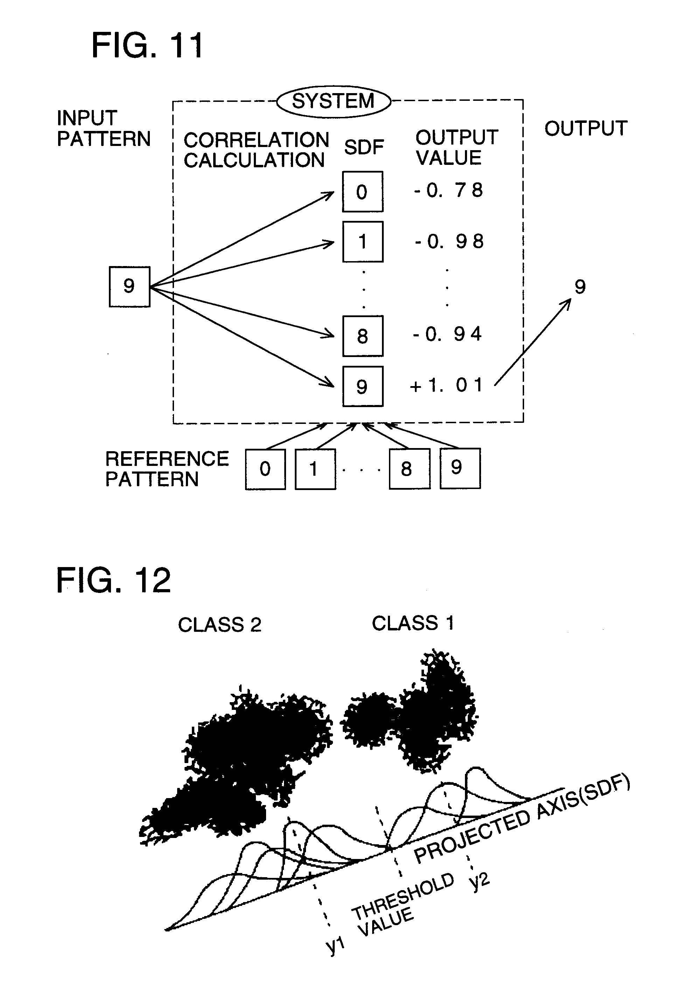

The correlation calculation is conducted with the ten sheets of SDFs with respect to one character; output values of the calculation are compared each other; the SDF which outputs the correlation value closest to +1 is checked; and its pattern is determined (step 42). Fig. 11 is a view showing a model of the foregoing operation.

After a redundant portion of the character information read out by the SDF has been checked, the character information is verified with a data base when the foregoing check is satisfied (step 43). For example, checksum added to the character information is used for the redundancy of the character information. In the checksum, the redundancy is provided to a digit in the character information; the number of the digit is determined as a function of other numbers; and the checksum has a facility for detecting errors. When the number coincides with a number in the data base, it is recognized that the character information is correctly read out. When the number does not coincide with a number in the character information, it is recognized that the character information is not correctly read out. Accordingly, the digit which has a character information is corrected (step 44), and after the checksum has been checked, the number is verified again (step 45). When correlation output values of SDFs are compared, specification to specify a digit to be corrected, and judgement to which character it should be corrected are made. In the case where the number detected in the foregoing does not coincide with any number in the data base even when correction is conducted to some extent, the character information is considered to be illegible (steps 46 and 47). In the verification processing, the character information is also verified with the character information which has been already verified in order to prevent erroneous recognition. In this case, when more than two couples of numbers coincide with the number determined in the foregoing, those are considered to be illegible, and it is outputted that those are illegible.

When font characters are newly discriminated, SDF may be corrected by adding reference patterns corresponding to the font characters, and newly registered.

Computer simulation was conducted on each stage of the recognition process. At first, characters were detected from an actual X-ray film as test patterns, and a correct reading ratio of the character recognition was checked. A method of the recognition is as described above. The correct reading ratio was 98.9%. A simulation of verification and correction of the character information (ID number) was carried out. In this case, 1,000 pieces of ID numbers which satisfy the checksum are made at random, and a data base is formed. The same numbers as the ID numbers were made by a combination of the foregoing test patterns, and after the numbers were discriminated by SDF, a simulation of verification and correction was carried out. Characters in three digits of ID numbers in seven digits of ID numbers were corrected. The result of the simulation is shown in Table 1. In ID numbers which were considered to be illegible in the simulation, more than four characters were falsely read, and it is attributed to that those characters could not be corrected.

From the result in which the correct reading ratio is 98.9% with respect to each character, a probability that all the seven digits can be correctly read is 92.5%. This method shows that a ratio of the recognition of ID numbers can be increased to 99.7%. From this result, it can be said that the foregoing algorithm is effective.

Table 1

| Recognition | Illegible | False recognition |
|---|---|---|
| 99.7% | 0.3% | 0% |

An experiment through a series of processes was also carried out in which: data on the X-ray film was digitalized and the ID number was read out; and after the ID number had been verified with the data base, it was recognized. This was conducted from the reason why problems and points to be changed can be found which are clearly appeared when the system proposed in this investigation is actually conducted using the actual film. In the photographic film used in the experiment, the foregoing longitudinal and lateral lines are provided in the character information section. The direction of placement of the film was not limited, the lines were digitalized and the recognition was carried out. The result is shown in Table 2. Total 127 sheets of films were tested, and 124 sheets of films (97.6%) could be recognized. The reason why three sheets of films could not be read out is attributed to that the number of the last digit of the ID numbers was photographed in an end portion of the character area section, and even when the pre-processing was conducted, it could not be correctly read out because the contrast was low. When considering that these X-ray films were prepared for this simulation, and conditions of the films were bad because name cards were further inclined at the time of film insertion compared with the normal case and so on, it can be considered that the rate of recognition will be more increased at the time of practical use.

Table 2

| Recognition | Illegible | False recognition |
|---|---|---|
| 124 sheets | 3 sheets | 0 sheet |
| 97.6% | 2.4% | 0% |

Next, an embodiment of a method in which the optimum SDF is formed while the SDF used for the foregoing character recognition is being appreciated by the Fischer ratio will be described as follows.

At first, a function of the SDF will be described as follows.

When the number of font characters is M, patterns of M font characters with respect to the same characters are expressed by vectors of N dimensions as follows.

[Equation 5]    $X = (x_1, x_2, \cdots, x_M)$,

Further, conditions in which the same characters of M font characters are recognized as the same characters can be expressed as follows:

$X^T h_0 = d$

$d = (d, d, \cdots, d)^T$  (1)

where SDF is $h_0$, the correlation output value is $d$, and $T$ is transposition of a matrix.

On the other hand, SDF can be expressed as follows:

$h_0 = \Sigma a_1 x_1 = Xa$

$a = (a_1, a_2, \cdots, a_M)^T$  (2)

Suppose that the reference pattern is linearly independent, and when Equation (2) is substituted for Equation (1), the following equation can be obtained:

$X^T(Xa) = d \rightarrow a = (X^T X)^{-1} d$

Thereby, SDF can be obtained as follows:

$h_0 = X(X^T X)^{-1} d$  (3)

When the reference pattern and its output value are determined as described above, SDF can be designed.

Conditional expression (2) of SDF which is expressed by Equation (3) means that the SDF is limited to vectors in a partial space formed by M reference patterns in a space of N dimensions. The SDF in Equation (3) introduced from the conditional expression (2) is not a general solution of a mathematical linear equation. In contrast to the foregoing, Z. Bahri et al. introduced generalized SDFs as a general solution of the linear equation (1) in 1988, and established that various SDFs which were introduced up to that time could be expressed by the generalized SDFs.

The conventional SDF and the generalized SDF can be expressed using a singular value decomposition method (SVD) as follows.

[Equation 6]

$$X = \sum_{j=1}^{M} \lambda_j \mathbf{u}_j \mathbf{v}_j^T$$

$$\mathbf{d} = \sum_{j=1}^{M} \delta_j \mathbf{v}_j$$

$$\mathbf{h}_0 = \left( \sum_{j=1}^{M} \lambda_j \mathbf{u}_j \mathbf{v}_j^T \right) \left( \sum_{j=1}^{M} \frac{1}{\lambda_j^2} \mathbf{v}_j \mathbf{v}_j^T \right) \left( \sum_{j=1}^{M} \delta_j \mathbf{v}_j \right)$$

$$= \sum_{j=1}^{M} \frac{\delta_j}{\lambda_j} \mathbf{u}_j$$

The generalized SDF can be expressed as follows:

$$\mathbf{h}_g = \sum_{j=1}^{M} \frac{\delta_j}{\lambda_j} \mathbf{u}_j + \sum_{j=M+1}^{N} \beta_j \mathbf{u}_j$$

The conventional SDF and generalized SDF of deviation from the set correlation value caused by noises not relying on substance can be expressed using expression by SVD as follows:

[Equation 7]

$$n^T h_o = \left( \sum_{j=1}^{N} \gamma_j u_j \right) \left( \sum_{j=1}^{M} \frac{\delta_j}{\lambda_j} u_j \right)$$

$$= \sum_{j=1}^{M} \frac{\delta_j}{\lambda_j} \gamma_j$$

$$n^T h_g = \left( \sum_{j=1}^{N} \gamma_j u_j \right) \left( \sum_{j=1}^{M} \frac{\delta_j}{\lambda_j} u_j + \sum_{j=M+1}^{N} \beta_j u_j \right)$$

$$= \sum_{j=1}^{M} \frac{\delta_j}{\lambda_j} \gamma_j + \sum_{j=M+1}^{N} \beta_j \gamma_j$$

In the generalized SDF, design is carried out using also components which cross the reference pattern at right angles, and therefore, there are characteristics in which degrees of freedom at the time of design are considerably large compared with the conventional SDF. Variance of the conventional SDF and the generalized SDF can be expressed from the deviation caused by noises as follows.

[Equation 8]

$$In^T h_o = \left\langle \left\{ \sum_{j=1}^{M} \frac{\delta_j}{\lambda_j} \gamma_j - \sum_{j=1}^{M} \frac{\delta_j}{\lambda_j} \overline{\gamma_j} \right\}^2 \right\rangle$$

$$= \left\{ \sum_{j=1}^{M} \frac{\delta_j}{\lambda_j} \left\langle \gamma_j - \overline{\gamma_j} \right\rangle \right\}^2$$

$$In^T h_g = \left\langle \left\{ \sum_{j=1}^{M} \frac{\delta_j}{\lambda_j} \gamma_j + \sum_{j=M+1}^{N} \beta_j \gamma_j - \left( \sum_{j=1}^{M} \frac{\delta_j}{\lambda_j} \overline{\gamma_j} + \sum_{j=M+1}^{N} \beta_j \overline{\gamma_j} \right) \right\}^2 \right\rangle$$

$$= \left\{ \sum_{j=1}^{M} \frac{\delta_j}{\lambda_j} \left\langle \gamma_j - \overline{\gamma_j} \right\rangle - \sum_{j=M+1}^{N} \beta_j \left\langle \gamma_j - \overline{\gamma_j} \right\rangle \right\}^2$$

Here, variance of deviation from the setting value of the conventional SDF depends on only the reference pattern, however, the generalized SDF depends on also components which cross the reference pattern at right angles. Paying attention to the foregoing, when components which cross the reference pattern at right angles are determined in the generalized SDF so that these components satisfy the following equation, a stable SDF can be designed with respect to common colored noises.

[Equation 9]

$$\sum_{j=M+1}^{N} \beta_j \left\langle \gamma_j - \overline{\gamma_j} \right\rangle \cong \sum_{j=1}^{M} \frac{\delta_j}{\lambda_j} \left\langle \gamma_j - \overline{\gamma_j} \right\rangle$$

12

Then, $\beta_i$ in the above equation is determined when the Fischer ratio is used as the criterion for evaluation, and the optimum SDF is formed.

The Fischer ratio which is a function of a linear discriminant function h can be expressed as follows.

[Equation 10]

$$\text{Fischer ratio } J(h) = \frac{\left(\overline{y_1} - \overline{y_2}\right)^2}{\Sigma \sigma_i^2}$$

where $\overline{y_1}$, $\overline{y_2}$ are expected values of correlation output values of classes when the character pattern is discriminated into two classes by the synthetic discriminant function, and $\sigma_i$ are their variances.

The linear discriminant function by which the Fischer ratio is maximum is a projection axis of multidimensional spaces in which separation of two classes is emphasized most, and when it is supposed that the pattern is formed into Gaussian distribution, the optimum SDF can be formed according to conditions by which the Fischer ratio is made maximum (refer to Fig. 12).

The Fischer ratio can be expressed using the foregoing $h_g$ as follows. In this case, it is supposed that there are respectively $M_1$, and $M_2$ reference patterns in classes 1 and 2. Each pattern of each class is expressed as $X_1^{(i)}$, and each average vector is expressed under the condition that a bar is attached to each average vector. Then, the numerator can be expressed as follows.

[Equation 11]

$$\left(\overline{y1} - \overline{y2}\right)^2 = \left(\mathbf{h}_g^T \overline{\mathbf{x1}} - \mathbf{h}_g^T \overline{\mathbf{x2}}\right)^2$$

$$= \left\{\mathbf{h}_g^T\left(\overline{\mathbf{x1}} - \overline{\mathbf{x2}}\right)\right\}^2$$

$$= \mathbf{h}_g^T\left(\overline{\mathbf{x1}} - \overline{\mathbf{x2}}\right)\left(\overline{\mathbf{x1}} - \overline{\mathbf{x2}}\right)^T \mathbf{h}_g$$

$$= \mathbf{h}_g^T D \mathbf{h}_g$$

$$D = \left(\overline{\mathbf{x1}} - \overline{\mathbf{x2}}\right)\left(\overline{\mathbf{x1}} - \overline{\mathbf{x2}}\right)^T \qquad (4)$$

$$\sigma_1^2 + \sigma_2^2 = \frac{1}{M_1}\sum_{j=1}^{M_1}\left(y1^{(j)} - \overline{y1}\right)^2 + \frac{1}{M_2}\sum_{j=1}^{M_2}\left(y2^{(j)} - \overline{y2}\right)^2$$

$$= \mathbf{h}_g^T C \mathbf{h}_g$$

$$C = \frac{1}{M_1}\sum_{j=1}^{M_1}\left(\mathbf{x1}^{(j)} - \overline{\mathbf{x1}}\right)\left(\mathbf{x1}^{(j)} - \overline{\mathbf{x1}}\right)^T + \frac{1}{M_2}\sum_{j=1}^{M_2}\left(\mathbf{x2}^{(j)} - \overline{\mathbf{x2}}\right)\left(\mathbf{x2}^{(j)} - \overline{\mathbf{x2}}\right)^T$$

$$j(\mathbf{h}_g) = \frac{\mathbf{h}_g^T D \mathbf{h}_g}{\mathbf{h}_g^T D \mathbf{h}_g} \qquad (5)$$

When the equation (5) is differentiated by $\mathbf{h}_g$, the following equation can be obtained.

$$\lambda C \mathbf{h}_g = D \mathbf{h}_g \qquad (6)$$

When this eigenvalue problem is solved, a characteristic vector having the maximum eigenvalue is $h_g$

which should be found. However, in the case of the Fischer ratio in two classes, a right side of the equation (6) is obtained by the defined equation (4) of D.

[Equation 12]     $k' (x_1 - x_2)$,     (k':constant)

Then, $h_g$ can be obtained as follows:

$$h_g = kC^+ (x_1 - x_2),$$

$$k = \frac{k'}{\lambda_{max}},$$

where a sign $^+$ means a false reversal matrix. When this is expressed by SVD, the following equations are obtained:

$$C = \sum_{j=1}^{M} C_j u_j u_j^T$$

$$\overline{x1} - \overline{x2} = \sum_{j=1}^{M} x_j u_j$$

$$h_{opt} = k \sum_{j=1}^{M} \frac{x_j}{c_j} u_j \qquad\qquad (7)$$

It is found as described above that the SDF can be designed to be optimum when the Fischer ratio is used as a criterion for evaluation.

The generalized SDF which was formed when the Fischer ratio was used as the criterion for evaluation has been compared with the conventional SDF as follows.

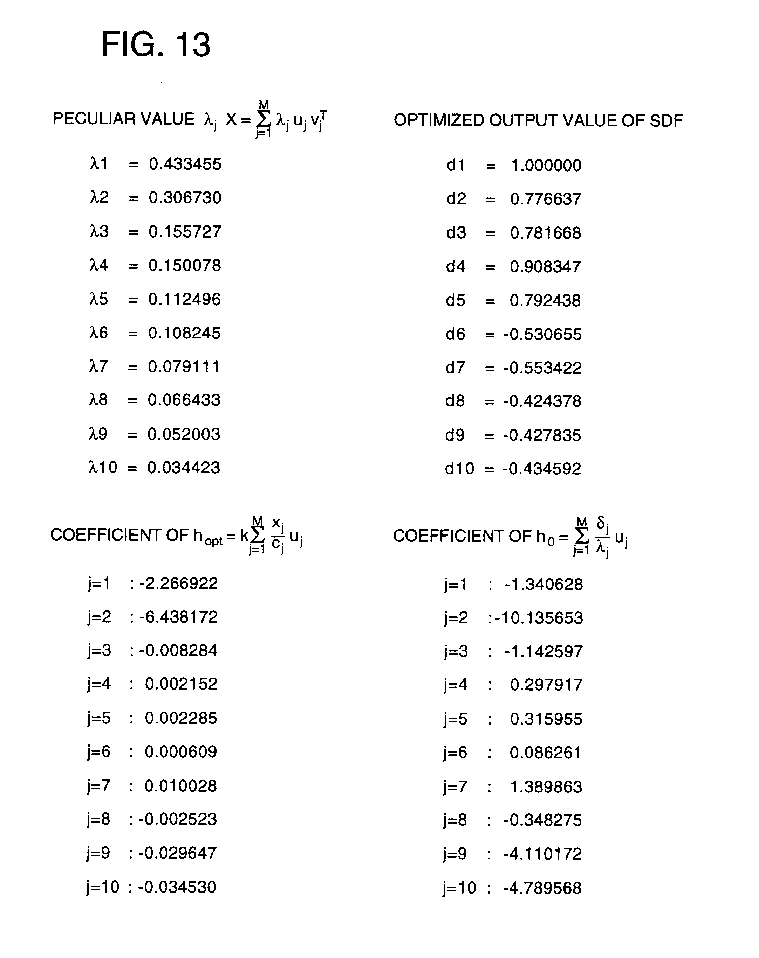

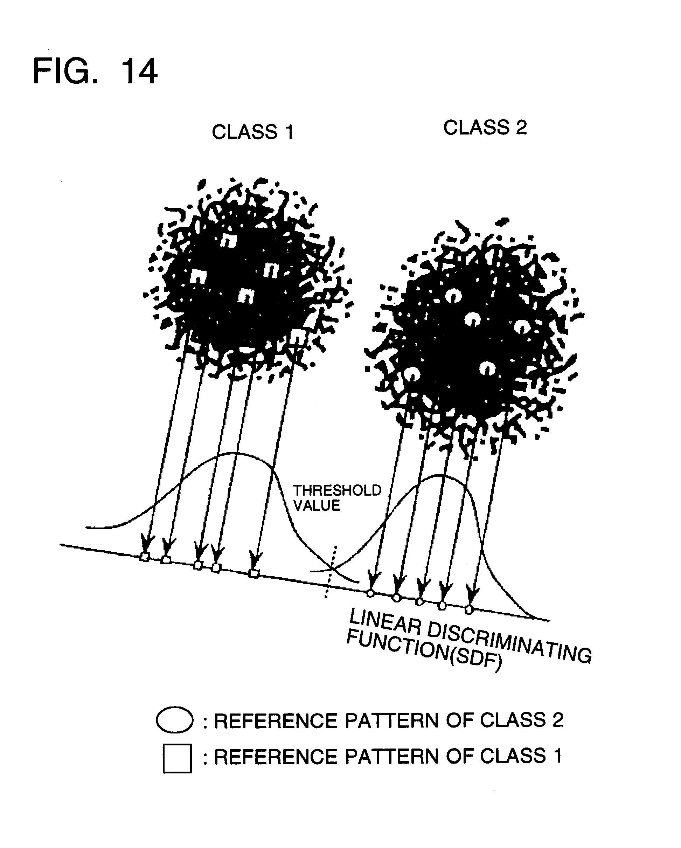

Comparison has been carried out with respect to discrimination problems of two figures (0), (1). The reference patterns have been prepared as follows: the pre-processing is conducted on characters of the X-ray films; the films are shifted upward and downward, and right and left; and five sheets of films are prepared respectively, that is, total ten sheets of films are prepared. Eigenvalues (shown in a left upper column) which are found by adding SVD analysis determined by the equation (7) to these reference patterns; correlation output values (shown in a right upper column) determined by the equation (7); and coefficients (shown in a left lower column and a right lower column) with respect to characteristic vectors $u_i$ of SVDs of an optimized SDF and the conventional SDF are shown in Fig. 13. The correlation output value of the conventional SDF is set to $+1$ with respect to a pattern [0], and -1 with respect to a pattern [1]. The correlation output value with respect to each pattern, as a model of which is shown in Fig. 14, is obtained when patterns distributed in the multidimensional space are projected on the SDF which is formed so that the Fischer ratio becomes maximum. In this case, a threshold value necessary when the pattern is separated, can be analytically determined when the average value and the variance of the distribution of correlation values on the projection axis are checked. Therefore, it is necessary that the SDF is formed by preparing reference patterns as many as possible. When coefficients with respect to characteristic vectors $u_i$ of SDFs are compared each other, coefficients of the third vector and after that ($j \geq 3$), eigenvalues of which are comparatively small, of the conventional SDF are larger than those of the optimum SDF. The reason why the component of ($+1$, -1) output of the SDF is large, is that the system is designed so that the same correlation value of $+1$ or -1 is outputted with respect to different patterns. The component, the eigenvalue of which is small, is described as follows. In the component, the transmission sensitivity to the correlation value is small, and therefore, it is not important. The cause in which the component of a noise is spread is attributed to that the foregoing component is large. In contrast to the foregoing, in the SDF which is formed so that the Fischer ratio can be maximum, these components are adjusted to be small, which shows that the system is optimized.

Next, an embodiment of a concrete forming method of the SDF in which the foregoing Fischer ratio is used as a criterion for evaluation will be described as follows.

In the case where only two characters are discriminated, one SDF may be formed so that the Fischer ratio is simply maximum using reference patterns of two characters. However, in the case where ten kinds of characters of 0 to 9 , such as figures used for character information recognition of the X-ray film, should be discriminated, it is necessary that one number is specified using a plurality of SDFs.

The following method may be adopted in which: the foregoing ten types of characters, for example, are classified into two classes of a group of characters by discrimination processing such as a tree structure; the classified classes are further classified into two classes, that is, a class with large numbers of figures are further classified into two classes with small numbers of figures; and the classified class is discriminated by the synthetic discriminant function.

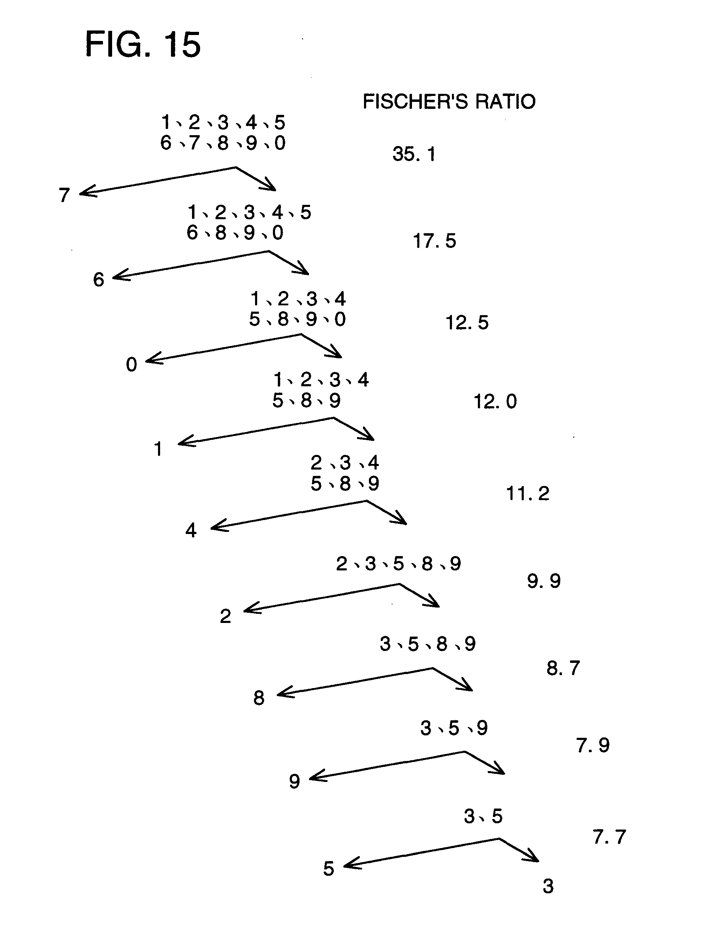

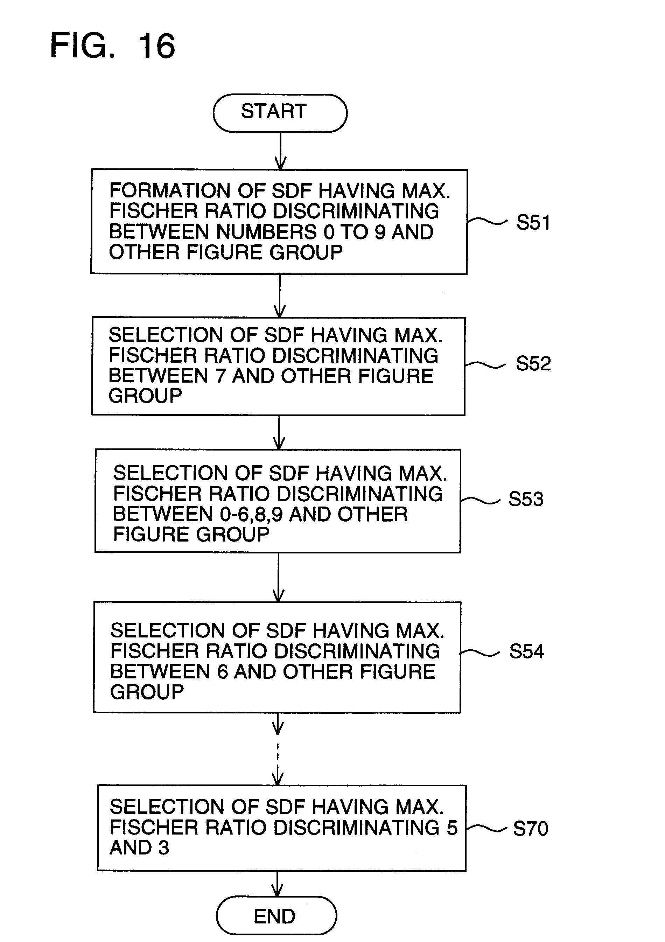

As the first method, an embodiment of a SDF forming method in the tree structure will be described according to a view showing a model of a discrimination tree structure in Fig. 15 and a flow chart shown in Fig. 16 as follows.

At first, with respect to ten combinations by which figures of [0] to [9] are discriminated into two classes, one class of which includes one figure, and the other class of which includes nine figures, SDFs are formed so that Fischer ratios can be respectively maximum (step 51).

Next, the SDF by which the Fischer ratio becomes maximum is selected from ten SDFs formed in the foregoing (step 52). In this embodiment, the SDF, by which figures are discriminated into the figure [7] and other figures, makes the Fischer ratio maximum. In this case, the maximum value of the Fischer ratio is 35.1. Then, the SDF by which figures are discriminated into the figure [7] and a group of other figures is selected as the first SDF.

With respect to a group of the remaining figures except on figure, that is [7], which is discriminated by the synthetic discriminant function selected in the foregoing, nine SDFs are formed so that Fischer ratios are respectively maximum in nine combinations by which figures are discriminated into one figure and the remaining 8 figures except one in the same way as the foregoing. Then, the SDF in which the Fischer ratio is maximum is selected (step 53). The selected second SDF discriminates figures into [6] and a group of the remaining figures, and the Fischer ratio is 17.5.

In the following manner as described above, the SDF in which the Fischer ratio is maximum is successively selected in SDFs in which the remaining figures are discriminated into one figure and the other figures (step 54 to step 70). The tenth SDF which is finally selected is the SDF which discriminates two characters. In this embodiment, it is the SDF which discriminates [5] and [3].

The result of the foregoing operations is shown in Fig. 15. One figure which is successively discriminated is [7] → [6] → [0] → [1] → [4] → [2] → [8] → [9] → [5], [3], and the Fischer ratio of each SDF is shown in the drawing.

Due to the foregoing, in the first to the tenth discriminations, the SDF which is found by using the Fischer ratio as the criterion for evaluation and which has considerably high discrimination facility can be obtained. Thereby, a group of ten SDFs by which figures of 0 to 9 can be most accurately recognized are obtained.

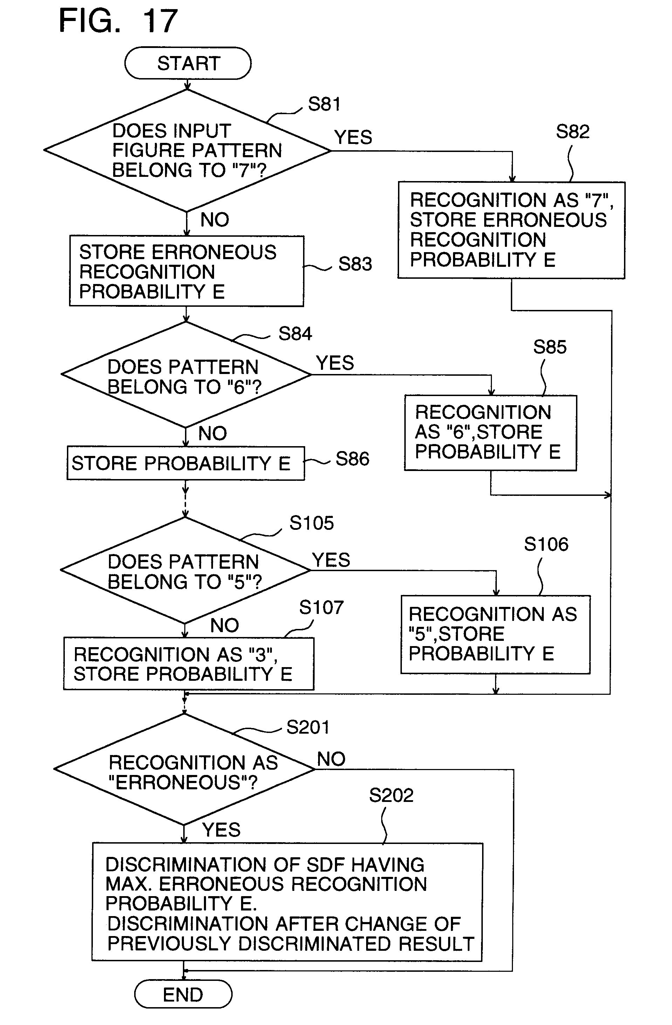

Next, an embodiment of a recognition method of the character information by using the SDF which is formed by adopting the Fischer ratio as the criterion for evaluation will be described as follows. In this embodiment, an example, in which figures of an ID number written in a character information section of the X-ray film is recognized by a group of ten SDFs formed in the foregoing, will be described according to a flow chart shown in Fig. 17 as follows.

At first, after characters (figures) have been detected from the character information section as described above, an inputted figure pattern is correlation-calculated with the first SDF and the correlation value x is found; the correlation value is compared with the threshold value; and it is discriminated that the inputted figure pattern belongs to [7] or a group of other figures (step 81).

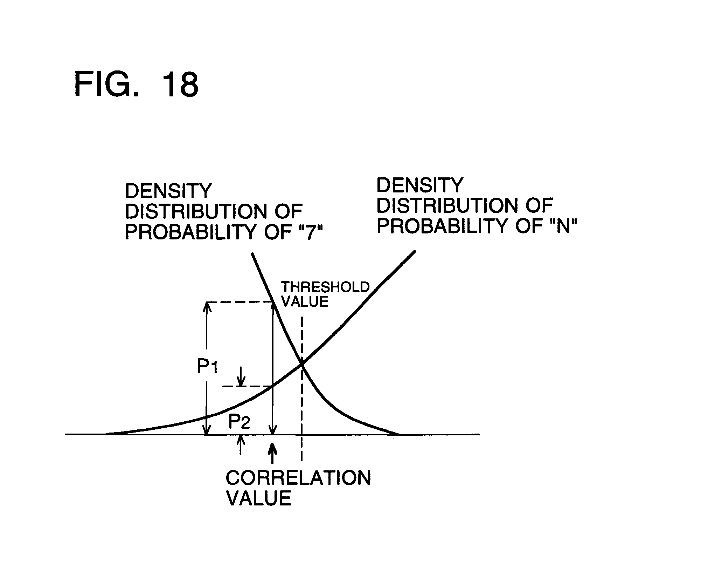

When it is discriminated that the pattern belongs to [7], a figure corresponding to the correlation value in the area of the character information section is found [7], and it is stored in the memory. At the same time, a probability that a fault discrimination result occurs by the first SDF is found according to the correlation value x. Specifically, as shown in Fig. 18, the foregoing operation is conducted as follows: the probability is found by the ratio P2/P1 of a probability density P1 in which the figure corresponding to the correlation value X by the first SDF belongs to [7], and a probability density P2 in which the figure corresponding to the correlation value X belongs to the figure [N] which is not [7], and the correlation of which with the figure [7] is highest. The value of P2/P1 is 1 in the threshold value, and the probability that two figures are correctly discriminated is smaller as the value of the ratio P2/P1 approaches 1. That is, because it can be evaluated that the probability in which error occurs in the discrimination result is high, this result is stored at the same time in the memory as a false recognition probability E (step 82).

Further, when it is discriminated by the first SDF that the inputted figure pattern belongs to a group of figures except [7], the value of the ratio P1/P2 which is a probability, in which an error occurs in the discrimination result according to the correlation value x, is stored in the memory as a false discrimination probability E as described above (step 83). In this case, P1 is a probability density in which the pattern belongs to the [N], and P2 is a probability density in which the pattern belongs to [7].

Next, the inputted figure pattern is correlation-calculated with the second SDF, and it is discriminated as described above that the pattern belongs to [6] or a group of the remaining figures. Then, the discrimination result and the false recognition probability E are stored in the memory (steps 84 and 85). These operations are conducted until it is recognized that the inputted figure pattern belongs to a specific figure (steps 85 to 106). As described above, because each SDF, by which the Fischer ratio becomes maximum, is used in each discrimination, high recognition performance can be obtained.

In this way, after recognition processing has been completed with respect to each input pattern, the ID number has been determined according to combination of the input patterns, and checking processing has been conducted by the checksum, the checked result is verified with the data base. When it is found that the checked result is erroneous, recognition processing is conducted again as follows. With respect to each recognized figure, a figure is selected which is judged to have the highest error occurrence probability according to the value of the false recognition probability E stored at the time when figures have been discriminated; the discrimination result of the SDF, in which the value of E is maximum, is found with respect to the selected figure; the discrimination result is changed, discrimination processing is conducted again, and another figure is recognized. For example, when it is found that a figure [2] has been falsely recognized in Fig. 15 (step 201), values of false recognition probabilities E1 to E6 of the discrimination results of the first to the sixth SDFs which have been used for the recognition are compared each other. When the false recognition probability E4 of the discrimination result of the fourth SDF is maximum, the discrimination result is changed, recognition processing is conducted again, and the figure [1] is recognized (step 202). In the case where the maximum value exists in E1 to E5, a specific figure can be recognized when the discrimination result is changed. When E6 is maximum, the discrimination processing is conducted again from the seventh SDF.

In the foregoing, the figure [2] is changed to the figure [1], and verification processing is conducted again. When the specific figure can not be found, the discrimination result of the SDF, in which the value of the false recognition probability E is secondary, is changed, discrimination processing is conducted again, and correction is conducted.

Due to the foregoing method, an accuracy of correction can be increased according to the false recognition probability E, and at the same time, a period of time for correction can be remarkably reduced.

In this example, a SDF group of a tree structure by which one figure is discriminated from other figures is used. However, for example, the following method may be adopted: the first SDF by which figures 0 to 9 is discriminated into two classes of groups of five figures at first, and the second and third SDFs by which each class of a group of five figures is further discriminated into a class of a group of two figures and a class of a group of three figures, are formed; and the SDF group of the tree structure by which each class is further discriminated may be formed.

According to the foregoing recognition method of the tree structure, because the number of times of discrimination processing to recognize the figure can be greatly decreased compared with the number of characters, the time for calculation can be also reduced, which is advantageous. Further, the following method may be adopted: the SDF to discriminate a character to be recognized from other characters is formed by using the Fischer ratio as a criterion for evaluation; and a plurality of SDFs, the number of which corresponds to the number of characters, are formed. In this method, the SDF by which the Fischer ratio becomes maximum may be formed using a reference pattern of a predetermined character image to be discriminated and a reference pattern of the image which is formed by superimposing other characters each other.

The character recognition process using the SDF formed by the foregoing method is the same as that described in the foregoing example of pre-processing.

As described above, according to the synthetic discriminant function forming method of the present invention, the following advantages can be obtained: because the Fischer ratio is formed as the criterion for evaluation, the synthetic discriminant function with high discrimination facility can be obtained; and the discrimination facility can be remarkably increased with respect to the function which successively classifies characters from a large class of characters to a small class of characters, or a function to discriminate a character to be discriminated from other characters, wherein these functions are respectively used for the tree structure.

Further, even when an error occurs in recognition, the discrimination result including the maximum amount of errors is assumed, and the result is changed and recognized again. Thereby, the operation time necessary for obtaining a correct result can be remarkably reduced.

Further, pre-processing, in which longitudinal and lateral line-shaped marks are attached so that inclination of a character can be detected and corrected, and by which the direction and position of the character are corrected, is conducted, so that the time necessary for the overall character recognition processing can be greatly reduced.

**Claims**

1. A character recognition method of synthetic discriminant function for use in discriminating characters by conducting correlation calculation of the synthetic discriminant and a character pattern, comprising the steps of:

   (a) forming a synthetic discriminant function by using a Fischer ratio indicated in the following equation as a criterion for evaluation;

$$\text{Fischer ratio } J(h) = \frac{\left(\overline{y_1} - \overline{y_2}\right)^2}{\Sigma \sigma_i^2}$$

   in which $\overline{y_1}$, $\overline{y_2}$ represent the expectation value of correlation output value of each class when the character patterns are discriminated into two classes by the synthetic discriminant function, and $\sigma_1$ represents the variance of correlation output value.

2. The forming method of claim 1 further comprising the steps of:

   (a) classifying types of characters to be recognized into two classes;
   (b) forming synthetic discriminant functions so that each of Fischer ratio to each combination of the classified classes is made maximum;
   (c) selecting a synthetic discriminant function corresponding to a predetermined classified combination in which Fischer ratio is maximum;
   (d) further classifying a class, which can be classified, in previously classified two classes into two classes;
   (e) further selecting, in the same way as the step of (c), a synthetic discriminant function corresponding to the predetermined classified combination;
   (f) forming a group of synthetic discriminant functions by repeating the step of (e) so that all types of characters can be recognized.

3. The forming method of claim 2, wherein the step of (f) further comprises:

   (g) forming a first synthetic discriminant function to discriminate a first single character from remaining characters;
   (h) then forming a second synthetic discriminant function to discriminate a second single character out of the remaining characters from remaining characters excluding the second single character; and
   (i) repeating the same step as the step (h) so that all characters can be recognized.

4. The forming method of claim 1 further comprising the step of:

   forming synthetic discriminant functions each to discriminate each character to be recognized from characters other than the character so that each Fischer ratio is maximum, thereby all characters can be recognized.

5. A character recognition method comprising the steps of:

   (a) classifying types of characters to be recognized into two classes;
   (b) forming synthetic discriminant functions so that each of Fischer ratio to each combination of the classified classes is made maximum,
      wherein the Fischer ratio is satisfied with the following equation as a criterion for evaluation;

$$\text{Fischer ratio } J(h) = \frac{\left(\overline{y_1} - \overline{y_2}\right)^2}{\Sigma\sigma_i^2}$$

in which $\overline{y_1}$, $\overline{y_2}$ represent the expectation value of correlation output value of each class when the character patterns are discriminated into two classes by the synthetic discriminant function, and $\sigma_1$ represents the variance of correlation output value;

(c) selecting a synthetic discriminant function corresponding to a predetermined classified combination in which Fischer ratio is maximum;

(d) further classifying a class, which can be classified, in previously classified two classes into two classes;

(e) further selecting, in the same way as the step of (c), a synthetic discriminant function corresponding to the predetermined classified combination;

(f) forming a group of synthetic discriminant functions by repeating the step of (e) so that all types of characters can be recognized;

(g) conducting a correlation calculation with a character to be recognized, using the synthetic discriminant functions formed by the steps (a) through (f);

(h) selecting a class having a larger correlation value; and

(i) classifying and discriminating classes in succession from a class having a larger correlation value to a class having a smaller correlation value so that the character can be recognized as a specific character.

6. The character recognition method of claim 5, further comprising:

(j) storing a probability of occurrence of errors with respect to the discrimination result, according to the correlation value obtained by the correlation calculation with each of synthetic discriminant functions which has been used until characters have been recognized.

7. The character recognition method of claim 6 further comprising the steps of:

(k) detecting a synthetic discriminant function in which the probability of occurrence of errors in the discriminating result is maximum when found that the character has been erroneously recognized; and

(l) re-discriminating the discrimination result so that the character is newly recognized.

8. A character recognition method comprising the steps of:

(a) forming synthetic discriminant functions each to discriminate each character to be recognized from characters other than the character so that each Fischer ratio is maximum, thereby all characters can be recognized,

wherein the Fischer ratio is satisfied with the following equation as a criterion for evaluation;

$$\text{Fischer ratio } J(h) = \frac{\left(\overline{y_1} - \overline{y_2}\right)^2}{\Sigma\sigma_i^2}$$

in which $\overline{y_1}$, $\overline{y_2}$ represent the expectation value of correlation output value of each class when the character patterns are discriminated into two classes by the synthetic discriminant function, and $\sigma_1$ represents the variance of correlation output value;

(b) conducting correlation calculation of each of the formed composite discriminations with the characters to be recognized so that each of correlation values is obtained; and

(c) selecting a character in which the obtained correlation value is maximum.

9. The character recognition method of claim 8 further comprising the step of:

selecting a character corresponding to the character, the correlation value of which is next to the maximum, when found that the character has been erroneously recognized.

**10.** The character recognition method of claim 5 further comprising the step of:

comparing a combination of characters obtained by the recognition of each character with a recorded data indicating a combination of correct characters so that characters erroneously recognized can be found.

**11.** A pre-processing method of character recognition, comprising the steps of:

(a) drawing a line-shaped mark on either an upper side or a lower side of a group of characters recorded on a recording medium, the line-shaped mark being provided in a direction parallel to an array of characters;

(b) drawing a line-shaped mark on either a left side or a right side of the group of characters, the line-shaped mark being provided in a direction perpendicular to the direction of the array of characters;

(c) detecting an inclination angle of one of the line-shaped marks as a pre-processing to recognize the characters recorded on the recording medium;

(d) correcting an inclination angle of the group of characters according to the detected result of (c);

(e) detecting a position of the other line-shaped mark thereby detecting a direction and a position of the group of characters; and

(f) correcting image data of the group of characters to direct to a normal direction and position according to the detected result of the step (e).

**12.** The pre-processing method of claim 11, wherein the step of (c) comprises the steps of:

(g) obtaining image density distribution when the mark is projected either in a horizontal direction or a vertical direction corresponding to the direction of the line-shaped mark; and

(h) processing based on the obtained data when the obtained density distribution data is projected in the direction of an angle in which the density distribution data is inclined by every unit angle within a pre-setting angle.

**13.** A character recognition method, comprising the steps of:

(a) forming a synthetic discriminant function by using a Fischer ratio indicated in the following equation as a criterion for evaluation;

$$\text{Fischer ratio } J(h) = \frac{\left(\overline{y_1} - \overline{y_2}\right)^2}{\Sigma \sigma_i^2}$$

in which $\overline{y_1}$, $\overline{y_2}$ represent the expectation value of correlation output value of each class when the character patterns are discriminated into two classes by the synthetic discriminant function, and $\sigma_1$ represents the variance of correlation output value; and

(b) recognizing the character by correlation calculation of the synthetic discriminant function and a character pattern.

**14.** The character recognition method of claim 13, wherein the step (a) comprises the steps of:

(c) classifying types of characters to be recognized into two classes;

(d) forming synthetic discriminant functions so that each of Fischer ratio to each combination of the classified classes is made maximum;

(e) selecting a synthetic discriminant function corresponding to a predetermined classified combination in which Fischer ratio is maximum;

(f) further classifying a class, which can be classified, in previously classified two classes into two classes;

(g) further selecting, in the same way as the step of (e), a synthetic discriminant function corresponding to the predetermined classified combination;

(h) forming a group of synthetic discriminant functions by repeating the step of (g) so that all types of characters can be recognized.

**15.** The forming method of claim 14, wherein the step of (h) further comprises:

(i) forming a first synthetic discriminant function to discriminate a first single character from remaining characters;

(j) then forming a second synthetic discriminant function to discriminate a second single character out of the remaining characters from remaining characters excluding the second single character; and

(k) repeating the same step as the step (j) so that all characters can be recognized.

16. The forming method of claim 13, wherein the step (a) comprises the step of:

forming synthetic discriminant functions each to discriminate each character to be recognized from characters other than the character so that each Fischer ratio is maximum, thereby all characters can be recognized.

17. The character recognition method of claim 14, wherein the step (b) comprises the steps of:

(l) conducting a correlation calculation with a character to be recognized, using the synthetic discriminant functions formed by the steps (c) through (h);

(m) selecting a class having a larger correlation value; and

(n) classifying and discriminating classes in succession from a class having a larger correlation value to a class having a smaller correlation value so that the character can be recognized as a specific character.

18. The character recognition method of claim 17, further comprising:

storing a probability of occurrence of errors with respect to the discrimination result, according to the correlation value obtained by the correlation calculation with each of synthetic discriminant functions which has been used until characters have been recognized.

19. The character recognition method of claim 18 further comprising the steps of:

(o) detecting a synthetic discriminant function in which the probability of occurrence of errors in the discriminating result is maximum when found that the character has been erroneously recognized; and

(p) re-discriminating the discrimination result so that the character is newly recognized.

20. The character recognition method of claim 16, wherein the step (b) comprises the steps of:

(q) conducting correlation calculation of each of the formed composite discriminations with the characters to be recognized so that each of correlation values is obtained; and

(r) selecting a character in which the obtained correlation value is maximum.

21. The character recognition method of claim 20 further comprising the step of:

selecting a character corresponding to the character, the correlation value of which is next to the maximum, when found that the character has been erroneously recognized.

22. The character recognition method of claim 17 further comprising the step of:

comparing a combination of characters obtained by the recognition of each character with a recorded data indicating a combination of correct characters so that characters erroneously recognized can be found.

23. The character recognition method of claim 1, wherein the step (b) comprises the steps of:

(1) drawing a line-shaped mark on either an upper side or a lower side of a group of characters recorded on a recording medium, the line-shaped mark being provided in a direction parallel to an array of characters;

(2) drawing a line-shaped mark on either a left side or a right side of the group of characters, the line-shaped mark being provided in a direction perpendicular to the direction of the array of characters;

(3) detecting an inclination angle of one of the line-shaped marks as a pre-processing to recognize the characters recorded on the recording medium;

(4) correcting an inclination angle of the group of characters;

(5) detecting a position of the other line-shaped mark thereby detecting a direction and a position of the group of characters; and

(6) correcting image data of the group of characters to direct to a normal direction and position according to the detected result of the step (5).

24. The character recognition method of claim 23, wherein the step of (3) comprises the steps of:
(7) obtaining image density distribution when the mark is projected either in a horizontal direction or a vertical direction corresponding to the direction of the line-shaped mark; and
(8) processing based on the obtained data when the obtained density distribution data is projected in the direction of an angle in which the density distribution data is inclined by every unit angle within a pre-setting angle.

25. The character recognition method of claim 13, wherein the step (b) comprises the pre-processing steps of:
(1) detecting a position of a line-shaped mark drawn on a first side of a group of characters, and a position of a second line-shaped mark dawn on a perpendicular side to the first side of the group of characters; and
(2) correcting the group of characters to a normal direction and position according to the result of the step (1).

# FIG. 1

RADIATION INFORMATION SYSTEM 3

COMMUNICATION (CHARACTER DATA)

TRANSMISSION OF IMAGE DATA

DIGITIZED FILM

COMMUNICATION (IMAGE DATA)

1993.1.13
17-0339
0 0 0 0 0 0
H4.9.28M

F

1

2

PROCESSING COMPUTER

FILING OF IS&C

COMMUNICATION WITH RIS

ERROR CORRECTION

VERIFICATION OF D,B

RECOGNITION OF CHARACTERS

RECOGNITION/ VERIFICATION

DETECTION OF EACH CHARACTER IMAGE AREA

CORRECTION OF FILM INSERTION DIRECTION

SKEW CORRECTION OF CHARACTERS

SPECIFIED REGION OF CHARACTER INFORMATION

PRE-PROCESSING CHARACTER RECOGNITION

READING OUT OF IMAGE DATA

# FIG. 2

ID No. AREA
30mm × 50mm

60mm

ID No. AREA
20mm × 50mm

120mm

ID No. AREA
25mm × 50mm

15mm

15mm

ID No. AREA
15mm × 45mm

ID No. AREA
25mm × 40mm

EP 0 617 380 A2

# FIG. 3

NAME AREA

EP 0 617 380 A2

# FIG. 4

1993.    2.    8
○○○○ ○○○○
11 - 0 4 2 1 - 2
S. 42.   4.   21.   M

DIFFERENTIAL
IMAGE

# FIG. 5

```
                    START

                       │
                       ▼
        ┌──────────────────────────────┐
        │ CALCULATE VARIANCE VALUE OF  │
        │ IMAGE DATA WITH RESPECT TO   │──── S1
        │ REGISTERED AREA              │
        └──────────────────────────────┘
                       │
                       ▼
        ┌──────────────────────────────┐
        │ DETECT CANDIDATE RANK AREA   │
        │ HIGHER THAN AREA HAVING      │──── S2
        │ BIGGER VARIANCE VALUE        │
        └──────────────────────────────┘
                       │
                       ▼
        ┌──────────────────────────────┐
        │ ROTATE/REVERSE IMAGE DATA SO │
        │ THAT LONGER SIDE IS PLACED IN│
        │ HORIZONTAL DIRECTION AND AREA│──── S3
        │ IS POSITIONED AT UPPER LEFT  │
        └──────────────────────────────┘
                       │
                       ▼
                     END
```

# FIG. 6

```
                    ┌─────────────┐
                    │    START    │
                    └──────┬──────┘
                           │
                           ▼
              ┌─────────────────────────┐
              │ DIFFERENTIATE DATA      │──── S11
              │ OF OBTAINED AREA        │
              └───────────┬─────────────┘
                          │
                          ▼
              ┌─────────────────────────┐
              │ THRESHOLD VALUE         │
              │ PROCESSING TO           │──── S12
              │ DIFFERENTIATED IMAGE    │
              └───────────┬─────────────┘
                          │
                          ▼
              ┌─────────────────────────┐
              │ PROJECTION              │──── S13
              │ PROCESSING              │
              └───────────┬─────────────┘
                          │
                          ▼
              ┌─────────────────────────┐
              │ ROTATION OF IMAGE       │──── S14
              │ BY α DEGREE             │
              └───────────┬─────────────┘
                          │
                          ▼
                        ◇ S15
              NO   ┌──────────────────┐
           ◄───────│   IS IMAGE       │
                   │   ROTATED BY β   │
                   │   DEGREE?        │
                   └────────┬─────────┘
                          YES
                          ▼
              ┌─────────────────────────┐
              │ OBTAIN ANGLE θ          │
              │ HAVING MAX VALUE IN     │──── S16
              │ PROJECTION              │
              │ PROCESSING              │
              └───────────┬─────────────┘
                          │
                          ▼
              ┌─────────────────────────┐
              │ ROTATION OF IMAGE       │──── S17
              │ BY θ DEGREE             │
              └───────────┬─────────────┘
                          │
                          ▼
                    ┌─────────────┐
                    │     END     │
                    └─────────────┘
```

27

# FIG. 7

```
          ( START )
             │
             ▼
┌─────────────────────┐
│ DIFFERENTIATE       │
│ IMAGE WITH SKEW     │─── S21
│ CORRECTION          │
└─────────────────────┘
             │
             ▼
┌─────────────────────┐
│ THRESHOLD VALUE     │
│ PROCESSING TO       │─── S22
│ DIFFERENTIATED      │
│ IMAGE               │
└─────────────────────┘
             │
             ▼
┌─────────────────────┐
│ PROJECTION          │
│ PROCESSING TO       │
│ LATERAL DIRECTION   │─── S23
└─────────────────────┘
             │
             ▼
         ╱─────────╲          S24
        ╱  IS MAX.  ╲
       ╱   VALUE     ╲  NO
       ╲  LACATED    ╱────────┐
        ╲ ABOVE?    ╱         │
         ╲─────────╱          │
             │ YES            │
             ▼                │
┌─────────────────────┐       │
│ TURN UPSIDE         │─── S25 │
│ DOWN                │       │
└─────────────────────┘       │
             │◄───────────────┘
             ▼
           ( 1 )
```

MAX.VALUE OF
PROJECTION

# FIG. 8

① 

PROJECTION PROCESSING TO VERTICAL DIRECTION — S26

IS MAX. VALUE LOCATED RIGHT? — S27

NO

YES

TURN OVER IN THE DIRECTION FROM LEFT TO RIGHT — S28

OBTAINING OF IMAGE IN NORMAL DIRECTION — S29

END

29

# FIG. 9

START

DIFFERENTIATE IMAGE
WITH CORRECTION IN
INPUT DIRECTION AND
THRESHOLD VALUE
PROCESSING — S31

PROJECTION
PROCESING TO
LONGITUDINAL/
LATERAL DIRECTION — S32

DETERMINATION OF
DETECTING POSITION OF
EACH CHARACTER AREA IN
HORIZONTAL/VERTICAL
DIRECTION AT GROOVE
PORTIONS OF PROJECTION — S33

DETECTION OF EACH
CHARACTER AREA — S34

END

30

EP 0 617 380 A2

# FIG. 10

START

CALCULATION OF DETECTED CHARACTER AREA WITH SDF — S41

RECOGNITION OF CHARACTER HAVING CORRELATION VALUE CLOSEST TO +1 — S42

VERIFICATION OF CHARACTER WITH DATA BASE — S43

OK

NG

CORRECTION — S44

VERIFICATION OF CHARACTER WITH DATA BASE — S45

OK

NG

A PREDETERMINED NUMBER OF CORRECTION — S46

NO

YES

OUTPUT OF ILLEGIBILITY — S47

END

31

# FIG. 11

# FIG. 12

# FIG. 13

PECULIAR VALUE $\lambda_j$ $X = \sum\limits_{j=1}^{M} \lambda_j u_j v_j^T$

OPTIMIZED OUTPUT VALUE OF SDF

| | |
|---|---|
| $\lambda 1$ = 0.433455 | d1 = 1.000000 |
| $\lambda 2$ = 0.306730 | d2 = 0.776637 |
| $\lambda 3$ = 0.155727 | d3 = 0.781668 |
| $\lambda 4$ = 0.150078 | d4 = 0.908347 |
| $\lambda 5$ = 0.112496 | d5 = 0.792438 |
| $\lambda 6$ = 0.108245 | d6 = -0.530655 |
| $\lambda 7$ = 0.079111 | d7 = -0.553422 |
| $\lambda 8$ = 0.066433 | d8 = -0.424378 |
| $\lambda 9$ = 0.052003 | d9 = -0.427835 |
| $\lambda 10$ = 0.034423 | d10 = -0.434592 |

COEFFICIENT OF $h_{opt} = k\sum\limits_{j=1}^{M} \dfrac{x_j}{c_j} u_j$

COEFFICIENT OF $h_0 = \sum\limits_{j=1}^{M} \dfrac{\delta_j}{\lambda_j} u_j$

| | |
|---|---|
| j=1 : -2.266922 | j=1 : -1.340628 |
| j=2 : -6.438172 | j=2 : -10.135653 |
| j=3 : -0.008284 | j=3 : -1.142597 |
| j=4 : 0.002152 | j=4 : 0.297917 |
| j=5 : 0.002285 | j=5 : 0.315955 |
| j=6 : 0.000609 | j=6 : 0.086261 |
| j=7 : 0.010028 | j=7 : 1.389863 |
| j=8 : -0.002523 | j=8 : -0.348275 |
| j=9 : -0.029647 | j=9 : -4.110172 |
| j=10 : -0.034530 | j=10 : -4.789568 |

# FIG. 14

CLASS 1          CLASS 2

THRESHOLD
VALUE

LINEAR DISCRIMINATING
FUNCTION(SDF)

◯ : REFERENCE PATTERN OF CLASS 2
▢ : REFERENCE PATTERN OF CLASS 1

# FIG. 15

FISCHER'S RATIO

1、2、3、4、5
6、7、8、9、0

35. 1

7

1、2、3、4、5
6、8、9、0

17. 5

6

1、2、3、4
5、8、9、0

12. 5

0

1、2、3、4
5、8、9

12. 0

1

2、3、4
5、8、9

11. 2

4

2、3、5、8、9

9. 9

2

3、5、8、9

8. 7

8

3、5、9

7. 9

9

3、5

7. 7

5

3

# FIG. 16

START

FORMATION OF SDF HAVING MAX. FISCHER RATIO DISCRIMINATING BETWEEN NUMBERS 0 TO 9 AND OTHER FIGURE GROUP — S51

SELECTION OF SDF HAVING MAX. FISCHER RATIO DISCRIMINATING BETWEEN 7 AND OTHER FIGURE GROUP — S52

SELECTION OF SDF HAVING MAX. FISCHER RATIO DISCRIMINATING BETWEEN 0-6,8,9 AND OTHER FIGURE GROUP — S53

SELECTION OF SDF HAVING MAX. FISCHER RATIO DISCRIMINATING BETWEEN 6 AND OTHER FIGURE GROUP — S54

SELECTION OF SDF HAVING MAX. FISCHER RATIO DISCRIMINATING 5 AND 3 — S70

END

# FIG. 17

```
            ( START )
                │
                ▼
         ╱─────────────╲  ── S81
        ╱  DOES INPUT   ╲       YES
       ╱  FIGURE PATTERN ╲─────────────────┐
        ╲  BELONG TO "7"? ╱                 │  ── S82
         ╲───────────────╱                  ▼
                │ NO              ┌──────────────────────┐
                ▼                 │ RECOGNITION AS "7",   │
     ┌──────────────────┐        │ STORE ERRONEOUS       │
     │ STORE ERRONEOUS  │── S83  │ RECOGNITION           │
     │ RECOGNITION      │        │ PROBABILITY E         │
     │ PROBABILITY E    │        └──────────────────────┘
     └──────────────────┘                   │
                │                            │
                ▼                            │
         ╱─────────────╲  ── S84            │
        ╱ DOES PATTERN  ╲     YES           │
       ╱  BELONG TO "6"? ╲──────────┐       │  ── S85
        ╲───────────────╱          ▼        │
                │ NO      ┌──────────────┐   │
                ▼         │ RECOGNITION  │   │
     ┌──────────────────┐ │ AS "6",STORE │   │
     │ STORE PROBABILITY E│─S86│ PROBABILITY E│ │
     └──────────────────┘ └──────────────┘   │
                ┆                    │        │
                ▼                    │        │
         ╱─────────────╲ ── S105    │        │
        ╱ DOES PATTERN  ╲   YES     │        │
       ╱  BELONG TO "5"? ╲──────────┼────────┘
        ╲───────────────╱          │  ── S106
                │ NO  ── S107       ▼
                ▼         ┌──────────────────┐
     ┌──────────────────┐ │ RECOGNITION AS   │
     │ RECOGNITION AS "3"│ │ "5",STORE        │
     │ STORE PROBABILITY E│ │ PROBABILITY E    │
     └──────────────────┘ └──────────────────┘
                ┆                    │
                ▼                    │
         ╱─────────────╲ ── S201    │
        ╱ RECOGNITION AS╲    NO      │
       ╱  "ERRONEOUS"?   ╲───────────┘
        ╲───────────────╱
                │ YES        ── S202
                ▼
     ┌────────────────────────────────┐
     │ DISCRIMINATION OF SDF HAVING    │
     │ MAX. ERRONEOUS RECOGNITION      │
     │ PROBABILITY E.                  │
     │ DISCRIMINATION AFTER CHANGE OF  │
     │ PREVIOUSLY DISCRIMINATED RESULT │
     └────────────────────────────────┘
                │
                ▼
            ( END )
```

# FIG. 18

DENSITY
DISTRIBUTION OF
PROBABILITY OF "7"

DENSITY
DISTRIBUTION OF
PROBABILITY OF "N"

THRESHOLD
VALUE

P1

P2

CORRELATION
VALUE